# EUROPEAN PATENT SPECIFICATION

(11) **EP 2 359 212 B1**
(45) Date of publication and mention of the grant of the patent: **13.09.2017**
(21) Application number: 09796178.3
(22) Date of filing: 23.11.2009
(51) Int. Cl.: G06F 3/0488, G06F 3/01, G06F 1/16

(54) **INTERFACE ADAPTATION SYSTEM**
SCHNITTSTELLENANPASSUNGSSYSTEM
SYSTÈME D'ADAPTATION D'INTERFACE

(30) Priority: 15.12.2008 US 334893
(43) Date of publication of application: 24.08.2011
(73) Proprietor: Symbol Technologies, LLC, Holtsville, NY 11742 (US)
(72) Inventor: BALDWIN, Travis, Dix Hills NY 11746 (US); CHOI, Jaeho, Whitestone NY 11357 (US)
(74) Representative: Lorenz & Kopf PartG mbB Patentanwälte, LKGLOBAL
(86) International application number: PCT/US2009/065551
(87) International publication number: WO 2010/074868

(56) References cited:
- EP-A1- 1 892 611
- EP-A1- 1 993 028
- EP-A2- 1 923 778
- US-A1- 2002 101 418
- US-A1- 2003 103 038
- US-A1- 2005 154 798
- US-A1- 2006 197 750
- US-A1- 2008 077 865
- Mark S. Hancock; Kellogg S. Booth: "Improving Menu Placement Strategies for Pen Input" Proceedings of Graphics Interfaces 2004, May 17-19, London, Ontario 17 May 2004 (2004-05-17), pages 221-230, XP002570711 Retrieved from the Internet: URL:http://delivery.acm.org/10.1145/101000 0/1006085/p221-hancock.pdf?key1=1006085&ke y2=0864347621&coll=GUIDE&dl=GUIDE&CFID=799 02596&CFTOKEN=13791654> [retrieved on 2010-02-28]

## Description

### FIELD OF THE INVENTION

The present invention relates to design of user interfaces for electronic computing devices. In particular, the invention relates to system(s) and method(s) for automatically adapting the user interface of a device to enhance usability in response to the manner and conditions of operation.

### BACKGROUND

Advancements in technology have generated a variety of interactive computer devices used for a variety of functions, and employing a wide array of applications. Further, a single such device can be employed to effect numerous types of functionality as well as provide multiple applications. Many portable cellular phones act as communication devices, word processing devices, and media players. In order to facilitate and control functionality of a device, the device is typically provided with a user interface. Generally, the user interface is designed to enhance usability of the device. Usability is the degree to which the design of a particular user interface takes into account the human psychology and physiology of the user, and makes the process of using the device effective, efficient and satisfying.

Several user interfaces have been established in order to accommodate the variety of functions and applications available for interactive computer devices while accounting for usability. Devices manipulated through physical buttons, a form of a human user interface (HMI) are often designed with arrangement of the buttons to accommodate intended physical manner of operation. Devices comprising display screens for facilitation of interaction often utilize a graphical user interface (GUI). GUIs generally offer graphical icons, and visual indicators as opposed to text-based interfaces, typed command labels or text navigation to fully represent the information and actions available to a user. Interaction with the device is usually performed through direct manipulation of the graphical elements. In order to effectuate usability of a GUI, the visual and interactive elements are designed to enhance efficiency and ease of use for the underlying logical design of a stored program. Devices employing GUI may further design the user interface to account for the manner of physical operation. Many devices employ GUIs on a device with touchscreen interaction, wherein the graphical elements are manipulated by touching the element displayed on the screen in order facilitate interaction. In order to enhance usability, a device employing a touchscreen GUI may provide a user interface wherein the input elements are aligned along the right side of a device to accommodate operation with the right hand.

However, given the variety of functions and applications available on a device the manner in which a user operates the device can vary depending on specific function being exploited and application at use. For example, several portable electronic devices, can be held and operated with one hand, two hands, or no hands and operated with a stylus. The manner in which a user chooses to operate the device is often dictated by the function being exploited, such as making a phone call when used as a communication device, or typing on a keypad when used as a word processing device. Likewise, when employing a single functional aspect of the device, such as in the form of a media player, the particular application of the media player can influence manner of operation. Furthermore, the manner of operation of a device can vary depending on extrinsic factors such as conditions under which a user operates the device.

Although a user interface may be designed to enhance usability for a specific manner of operation, the user interface elements responsible for control or input interaction remain constant (as in devices with a HMI) or are dictated by the applications as programmed for the device (as in a device with a GUI). Therefore, when a user changes the manner in which he operates the device, the user is forced to accommodate the design of the user interface. The accommodation often entails altering the physical manner in which the user interacts with the device in a less efficient or appealing manner. For example, a user may have to reach across a screen to touch upon a command, thus upsetting a view of another onlooker. As a result the usability of the device decreases when the manner of operation changes.

US2006197750 describes hand held devices with multiple touch sensing devices. The touch sensing devices may for example be selected from touch panels, touch screens or touch sensitive housings. The hand held device which can be e.g. a tablet PC, a mobile phone, a game player etc, can be automatically configured based on how the user grabs the device. The touch sensing devices consist of a sensor arrangement configured to detect the presence of an object such as a finger as well as the location and pressure being exerted on the surface of the panel by the finger or palm of a hand. By way of example, the sensor arrangement may be based on capacitive sensing, resistive sensing, surface acoustic wave sensing and the like. Further examples are pressure sensors such as strain gauges, load cells, piezoelectric transducers and the like. The sensor arrangement is divided into several independent and spatially distinct sensing points positioned in a grid or pixel array, the sensing points each representing a different position on the surface of the device. Signals generated at the sensing points form a hand signal which represents how the user is holding the device. In particular, when a hand is in contact with the device and covers several sensing points thus producing a contact patch area, several sensing points are covered and when grouped together form the hand signal. Further, the signals in a given time frame may indicate the size, the location, the direction, the speed, the acceleration and the pressure of the finger or the palm on the surface of the device, and the orientation. A button signal is generated based on a difference between a first and a second hand signal. The device may contain a list of hand profiles and the hand signals may be used to determine the handedness of the user, i.e. left-handed or right-handed. Based on the determined handedness, the device can turn on the functionality of touch buttons corresponding to the hand being used and turn off the functionality of the touch buttons corresponding to the hand not being used. The document describes that the sensing points may be based on capacitance. By detecting when the capacitance changes, the device's electronics can determine when and where the finger or the palm of the hand are touching. Still further, the sensor arrangements include a two layer grid of spatially separated electrodes of wires. The upper layer includes electrodes in rows and the lower layer includes electrodes in columns. When a portion of a hand nears the intersection of two electrodes the capacitance of the electrodes changes and these changes can be used to determine the positions and of the finger and/or the palm when they grab the device. In a process flow a determination is made whether the user is touching the device. This is achieved with the touching sensing device capable of generating signals when a hand nears the device and a control system configured to monitor the activity of the touch sensing device. If it is determined that the user is not touching the device the process keeps the device in standby.

EP1923778 describes a mobile terminal and a screen display method of the mobile terminal. The mobile terminal includes: a display that comprises a user interface display region,
an information display region and a controller that changes positions of display regions and displaying the changed positions on the display according to a user selection.

US2005154798 describes an adaptable user interface. The adaptable user interface provides a more error free input function as well as greater ease of use when being used during certain events such as while moving.

US2003103038 describes an electronic device that includes a user-interface feature, a detection mechanism and one or more internal components. The user-interface feature is configurable to have a selected orientation about one or more axes.

EP 1 993028 describes a method of displaying controls in a touch panel including detecting contact of an object with the touch panel, determining a dimension of the object contacting the touch panel, and increasing a size of controls corresponding to the contact of the object when the dimension of the object is greater than a predetermined threshold.

US2002101418 describes a system and method providing visualization and layout schemes for a circular graphical user interface using global and local polar coordinate systems to display images.

Mark S. Hancock; Kellogg S. Booth: "Improving Menu Placement Strategies for Pen Input" Proceedings of Graphics Interfaces 2004, May 17-19, London, Ontario 17 May 2004 (2004-05-17), pages 221-230, XP002570711 describes menu selection in circular and rectangular pop-up menus using stylus-driven direct input on horizontal and vertical display surfaces.

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts of the described embodiments in a simplified form as a prelude to the more detailed description that is presented later.

Disclosed herein are system(s) and method(s) for automatically adapting the user interface of a computer operated device in response to the manner in which a user physically operates the device and the conditions surrounding operation in order to optimize usability of the device. The system(s) and method(s) pertain to devices using either a graphical user interface (GUI) wherein the user interacts with the device via a touchscreen medium or a human machine interface (HMI) comprising buttons (*e.g*., physical or virtualized) on a computerized device. For example, the device can be a handheld mobile device such as a tablet personal computer, a game control, or a large interactive display board. The system is particularly useful in devices operated in a variety of manners such that as the user modifies his manner of operation, the device adapts itself to accommodate the new manner of operation. Examples of different manners of operation include holding a device in one hand versus two, using a stylus, or controlling the function of a computer through the bottom left corner of a large touchscreen display.

When the user interface of the device is a GUI provided on a touchscreen enabled device, the system adapts the interactive elements such as input widgets including control panels, volume icons, call buttons, etc. such that the arrangement of the interactive elements enhances usability. The arrangement of the non-interactive elements can also adapt to offset the interactive elements while enhancing the size and arrangement of the elements in accordance with utility and aesthetic appeal. For example, when holding a device in the right hand the interactive elements can align on the right side while the non-interactive visual elements can comprise the center of the display. Similarly, when the interface is a HMI, the underlying functionality of the buttons can change in response to the manner in which the user operates the device. In another aspect of the invention, the design of the user interface can further account for extrinsic conditions such as the orientation of the device or environmental conditions including temperature, light, pressure, sound, etc.

In order determine the manner and the conditions of operation for a specific instance of use, the system provides a variety of sensors on or integrated within the device. The sensors can detect and provide information defining the physical location, identity and orientation of an object touching or surrounding the device. The sensors can also determine orientation of the device, and environmental conditions acting upon the device. In order to interpret the sensed information, a database is provided which stores information defining the variety of sensor information capable of being generated by the system and a defined group of physical and environmental parameters. The database further includes user interface designs and/or user interface elements. Upon generation of sensor signals, the system correlates the sensed information with the corresponding physical and/or environmental parameters associated with the sensed information. In turn, the system generates a user interface that enhances usability in light of the physical and/or environmental parameters.

To the accomplishment of the foregoing and related ends, one or more embodiments comprise the features hereinafter fully described and particularly pointed out in the claims. The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

### BRIEF DESCRIPTION OF THE DRAWINGS

FIG. 1 illustrates a high level embodiment of an interface adaptation system.
FIG. 2 demonstrates a basic methodology be which an interface adaptation system adapts a user interface in response to manner of operation of a device and/or conditions of use in order to enhance usability.
FIG. 3A illustrates an embodiment of a sensor component for detecting the manner of operation of operation and/or conditions of use of a device.
FIG. 3B demonstrates the methodology by which the sensor component detects the manner of operation and/or conditions of use of a device in order to generate a sensor code.
FIG. 4A illustrates various sensors dispersed in a particular arrangement on the bottom of a three-dimensional device.
FIG. 4B illustrates various sensors dispersed in a particular arrangement on the top of a three-dimensional device.
FIG. 4C illustrates a device completely enveloped by sensors.
FIG. 5 illustrates two examples of three-dimensional quadrant plains utilized as a means for establishing the sensor codes related to the physical contact parameters recognized by the system.
FIG. 6 illustrates provides an illustration of how the quadrant system is employed to establish coordinates related to the sensed physical position, identity and configuration of an interfacing object.
FIG. 7 illustrates a detailed embodiment of the adaptation component.
FIG.8 illustrates an embodiment of the interface formation component.
FIG. 9 illustrated a detailed depiction of the interface generation component as it relates to the interface correlation component.
FIG. 10 depicts a methodology by which the adaptation component adapts a user interface.
FIG.11 illustrates various manners of operation of a device and a associated user interface.
FIG. 12 illustrates a manner and environment of operation of a device and associated user interfaces.
FIG. 13 illustrates a block diagram of a computer operable to execute the disclosed architecture.
FIG. 14 illustrates an exemplary device operative to execute the one or more embodiments disclosed herein.
FIG. 15 illustrates a schematic block diagram of an exemplary computing environment in accordance with the subject system.

### DETAILED DESCRIPTION

Various embodiments are now described with reference to the drawings. In the following description, for purposes of explanation, numerous specific details are set forth in order to provide a thorough understanding of one or more embodiments. It may be evident, however, that the various embodiments may be practiced without these specific details. In other instances, well-known structures and devices are shown in block diagram form in order to facilitate describing these embodiments.

As used in this application, the terms "component", "module", "system", and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. The word "exemplary" is used herein to mean serving as an example, instance, or illustration. Any aspect or design described herein as "exemplary" is not necessarily to be construed as preferred or advantageous over other aspects or designs.

Furthermore, the one or more embodiments may be implemented as a method, apparatus, or article of manufacture using standard programming and/or engineering techniques to produce software, firmware, hardware, or any combination thereof to control a computer to implement the disclosed embodiments. The term "article of manufacture" (or alternatively, "computer program product") as used herein is intended to encompass a computer program accessible from any computer-readable device, carrier, or media. For example, computer readable media can include but are not limited to magnetic storage devices (*e.g*., hard disk, floppy disk, magnetic strips...), optical disks (*e.g*., compact disk (CD), digital versatile disk (DVD)...), smart cards, and flash memory devices (*e.g.,* card, stick). Additionally, it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the disclosed embodiments.

Various aspects can incorporate inference schemes and/or techniques in connection with transitioning interface schemes. As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events, or decision theoretic, building upon probabilistic inference, and considering display actions of highest expected utility, in the context of uncertainty in user goals and intentions. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

It is to be appreciated that various technologies such as voice recognition, inference, gaze recognition, advanced quality of service guarantee mechanisms, etc. can be employed to allow transitioning of interfaces. Moreover, various embodiments described herein can employ principles of artificial intelligence (AI) to facilitate automatically performing various aspects (*e.g*., transitioning interfaces, communication session, analyzing resources, extrinsic information, user state, and preferences, risk assessment) as described herein. An AI component can optionally include an inference component that can further enhance automated aspects of the AI component utilizing in part inference based schemes to facilitate inferring intended actions to be performed at a given time and state. The AI-based aspects can be effected *via* any suitable machine-learning based technique and/or statistical-based techniques and/or probabilistic-based techniques. For example, the use of expert systems, fuzzy logic, support vector machines (SVMs), Hidden Markov Models (HMMs), greedy search algorithms, rule-based systems, Bayesian models (*e.g.,* Bayesian networks), neural networks, other non-linear training techniques, data fusion, utility-based analytical systems, systems employing Bayesian models, etc. are contemplated and are intended to fall within the scope of the hereto appended claims.

Various embodiments will be presented in terms of systems that may include a number of components, modules, and the like. It is to be understood and appreciated that the various systems may include additional components, modules, *etc.* and/or may not include all of the components, modules, *etc.* discussed in connection with the figures. A combination of these approaches may also be used.

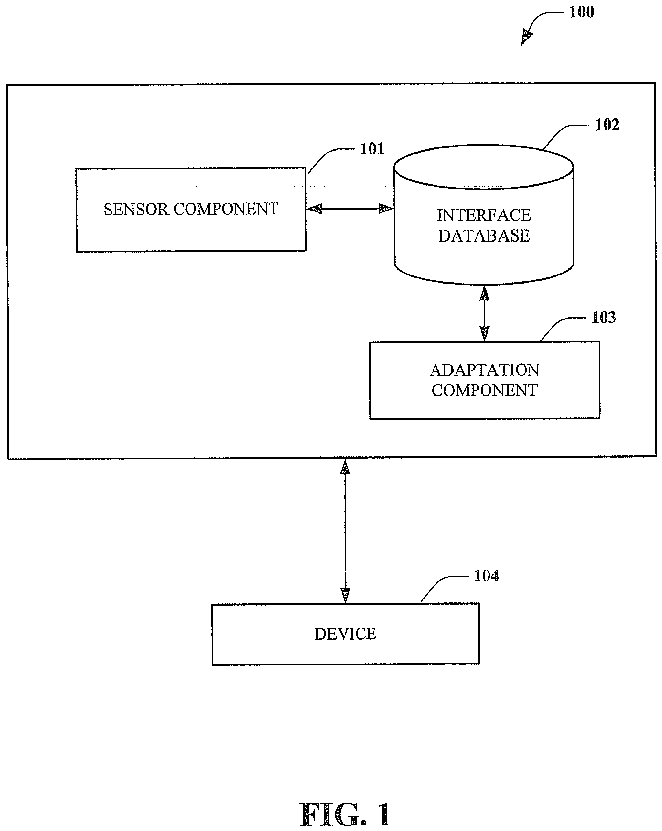

FIG. 1 illustrates a high level embodiment of an exemplary embodiment of a user interface adaptation system 100. The system can be implemented in any suitable computer operable device 104 with a user interface (UI) enabling interaction between the user and the device through physical manipulation of the device. The system 100 provides for determining or inferring user use (e.g., which hand is employed, type of applications or functionality desired, user preferences, manner of use, etc.), and optimizes a user interface of the device 104 to facilitate user employment thereof. For example, if the user is employing one hand versus another, the UI can be modified to optimize use with the particular hand. Moreover, size of the hand, length of fingers, historical user usage, handicaps, etc. can be factored so as to customize the user interface for optimizing interaction with the device. Additionally, the system can modify the UI as well as expose additional functionality (e.g., voice recognition, gaze recognition, retinal scans, biometric scans, and the like) to optimize interaction with the device. User state, device state, extrinsic information can also be factored as part of a utility based analysis to configure the UI of the device to enhance use thereof.

In one embodiment, the system is executable on a device using a graphical UI (GUI) displayed on an electronic device in which the user interacts with the device via touch (herein referred to a touchscreen device). The graphical UI comprises icons and visual indicators presented on a display screen such as an LCD display that are representative of information available to the user. The user can further interact with the device through direct manipulation of the graphical elements (herein referred to as widgets) on the display. In devices using a GUI, the system enables the visual composition and the temporal behavior of the graphical UI to adapt in response to manner in which a user physically operates the device.

In an alternative embodiment, the system can be implemented on a device utilizing a human machine interface (HMI). In this embodiment, the HMI comprises buttons that command input functions of the device. Further, the HMI interface comprising buttons is independent and indirectly linked to the underlying applications controlling functionally of the device. Therefore, the buttons can be neutral with respect to a particular function. In turn, the buttons have the capability of temporally developing a variety of input commands. In such embodiment, the functionally of a versatile set of buttons can adapt depending on manner of physical operation of the device. It is to be appreciated that GUIs and HMIs can be employed concurrently, or as a hybrid type of interface.

The system is particularly beneficial in a device that is operable in a variety of physical arrangements with relation to position device and the manner in which the user physically operates the device. The device may be any portable electronic device operable with one hand, two hands, or via stylus such as a mobile phone, (or smartphone), a personal digital assistant (PDA), a tablet personal computer (PC), a portable media players, or handheld gaming device. In another embodiment, the device can be any touchscreen computing device. For example, devices employing point of sale software, automated teller machines (ATMs), airline self-ticketing and check-in devices, information kiosks in a public space, or a global positioning system (GPS) device mounted in automobile or airplane. In another embodiment, the device can be an electronic controller for use in video gaming. In another embodiment, the device can be a versatile handheld weapon operable in a variety of hand positions. Finally, although the shapes of the devices named above are known, the device can be any three-dimensional or two-dimensional shape. It should be appreciated that the listing of possible executable devices above is not exhaustive and technological advancement will introduce additional devices where the subject system will be applicable.

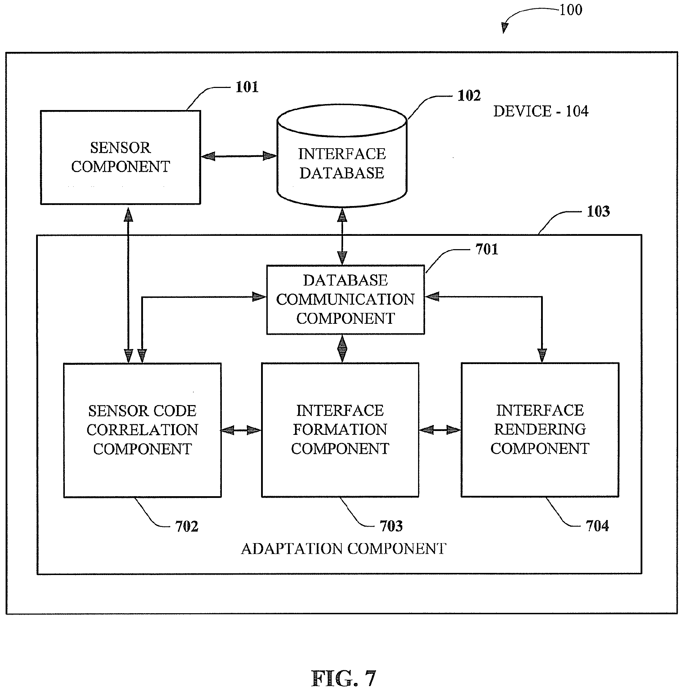

Referring back to FIG. 1, the interface adaptation system 100 comprises a sensor component 101, an interface database 102, and an adaptation component 103. The sensor component 101 enables detection of at least one of physical position, identity and configuration of the interfacing object, conditions of operation, or extrinsic information (e.g., orientation, temperature, ambient conditions, location, ...), and processes the sensed information. The interface database stores information pertaining to various manners of operation of a device and the interfaces that are applied in response to the manner of operation; and it can store data associated with other components of system 100 as well as externally received data. The adaptation component 103 is responsible for interacting with the interface database in response to manner of operation of the device in order to modify the UI. The adaptation component will be described in greater detail with reference to FIGS. 7-10.

The sensor component 101 represents one or more sensors. The sensors can be attached to or integrated within a device 104. A device can comprise one or more sensors or be completely enveloped by sensors. The sensors can be capacitive, resistive, pressure sensing, positional, inductive, thermal, optical or laser or any combination of the above. The sensor component 101 can further comprise accelerometers. The accelerometers can provide gesture recognition and facilitate movement between different UI(s) as the points of contact on the device change. The accelerometers can further detect the orientation of the device 104. Similarly, additional positional sensors can be applied such as gyroscopic sensors, or acoustic or infrared sensors. Furthermore, the sensor component can contain an environmental sensor system including conventional light, image, thermal, electromagnetic, vibratory, atmospheric pressure, or acoustic sensors. It is to be appreciated that a thin film or the like of sensors can be incorporated as a skin of the device or portion thereof to facilitate detecting user intended use.

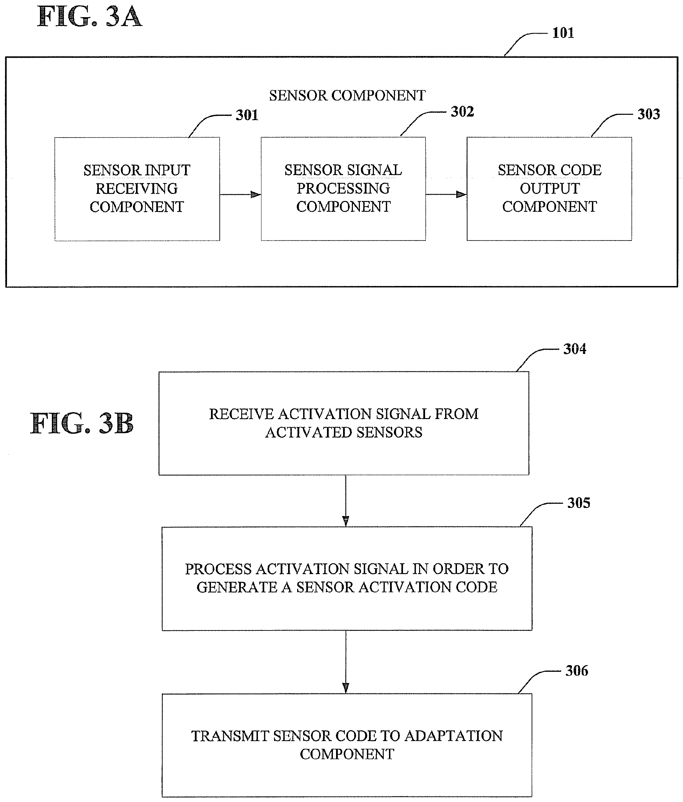

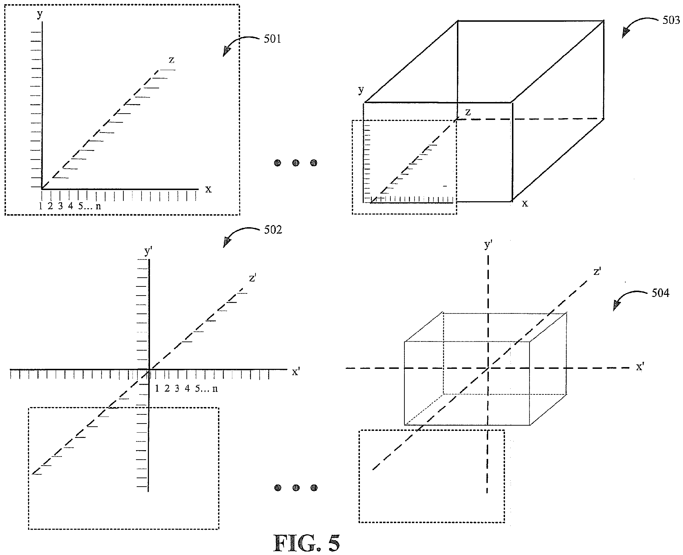

The sensor component 101 is generally depicted in FIGS. 3A and 3B. The sensor component comprises a sensor input receiving component 301, a sensor signal processing component 302, and a sensor signal output component 303. The sensor input receiving component 301 receives an activation signal from the activated sensors 304. The sensor signal processing component 302 then processes the activation signals in order to generate a sensor activation code 305. The activation of the sensors will vary depending on the sensors utilized. For example, activation of the sensor can be a response to pressure exerted on the device, a change in lighting dimensions surrounding the device, or a change in thermal energy around the device. The code is representative of the specific activated sensors. The sensor code generating aspect of the sensor processing component will be described in greater detail with regards to FIGS. 5-6. The sensor signal output component 303 transmits the sensor code to the interface database 102.

The interface database 102 can contain information pertaining to sensor code recognition, physical contact parameters, environmental parameters, interface elements and interface design settings, and user identification. The database serves as a look-up table for mapping a UI in response to sensed information by way of correlating processed sensor signals with a physical contact parameter or environmental parameter. A physical contact parameter defines the relationship between a sensor activation code and the physical position, type and configuration of an object contacting or surrounding the device (e.g. human hand, stylus, table, or other object). For example, when the sensor component receives signals indicating contact with the device, the physical contact parameter will indicate the exact position of the object touching the device. Further, in addition to the location of the object touching the device, the physical contact parameter can identify the activation code responsive to the touch with the type of object generating the touch. For example, the object can be a left or right hand, a finger, a stylus, a table etc. The physical contact parameters can also account for additional contact points pertaining to a specific device such as a holder or stand specifically designed for the device. A device employed with thermal sensors can further distinguish between human body parts and inanimate objects.

In another aspect of the invention, the physical contact parameters can define the anatomical configuration of the object contacting the device. In this aspect of the invention, the physical contact parameter draws a relationship between the contact point(s) and the type of object contacting the device. When the object is an inanimate object, the identity of the object as either an interfacing object such as a stylus or a support object, such as a table, can dictate the manner in which the object is used. When used as an interfacing object, the physicality of the object and the manner in which a user handles the object can be factored into the physical contact parameter. When the object is a human body part, the anatomy and physiology of the human body part will further be taken into account. For example, when defining a physical contact parameter, the physiology of a human hand limits the distance at which interactive elements are distanced on a UI. Further, the manner of operation of the device with respect to the applications and function of the device can be a factor in determining the physical contact parameter. The manner of operation can include how a user positions his hand or hands with relation to the shape and operation of the device in order to use the applications of the device. For example, when an application of the device requires input through a keypad, a detection of five contact points can equate to the manner in which a user positions the five fingers of a right hand for use of a keypad.

The sensor component 101 can further compromise thermal or optical sensors that detect, in addition to the physical contact points, the spatial location of an object surrounding a device. (Although an object may not be contacting a device per se, the information pertaining to the spatial location and configuration of the surrounding object will be classified as a physical contact parameter for purposes of explanation). This aspect of the invention provides another means by which to establish the precise anatomical configuration of the object interfacing with the device. This aspect of the invention can be combined with the physical parameters establishing the position of an object contacting the device. For example, a physical contact parameter can include the elevation and configuration of a hand over a device when two fingers are touching the device. Therefore, the sensor component 101 can detect a manner in which a a user interacts with a device with more accuracy.

Similarly, in another aspect of the invention, the physical contact parameters can be representative of spatial orientation of an object surrounding a device that is not touching the device. For example, the spatial sensors can detect where an object is hovering over a device. Thus, in addition to the anatomical configuration of the interfacing object, the physical contact parameters can encompass the distance of an object from the device and the particular angle or orientation of an object around the device. In this embodiment, an invisible three-dimensional grid can exist in the space surrounding a device in order to transcribe a code accounting for the spatial position of the object around the device.

Considering the variety of factors which can define a physical contact parameter it should be appreciated that a large number of parameters are encompassed by the system 100 and embodied within the interface database. Furthermore, in another aspect of the invention a device may operate through manipulation of more than one user. For example, consider a gaming device with a GUI where several users place their hands on the GUI in order to interact with the device and perform the game. In this embodiment of the invention, the physical contact parameters will increase in number in order to account for differentiation between the several users and the manner of operation of each individual user.

As mentioned above, the physical contact parameters correlate to a specific activation sensor code. The number of physical contact parameters will depend on the number of related sensor codes which a specific embodiment of the system establishes. Likewise, the number of sensor codes will depend on the number and type of sensors employed. For example, consider a three dimensional rectangular prism shaped device with two capacitive sensors along the edges, respectively assigned left, and right. The device further has a third senor located on the back plain of the device. The device is designed to be grasped in one hand (the left or right hand), two hands, or to lie on its back whereby the user interacts with the device utilizing a stylus. In this example, the language used to define a sensor code could be as simple as a 1 for left sensor activation, a 2 for right sensor activation, a 1-2 left and right sensor activation, a 3 for back sensor activation, and a 4 and 5 for top and bottom sensor activation, respectively. The physical contact parameters of the device with response to activation of the sensors will be as follows: 1 = left hand use, 2 = right hand use, 1 - 2 = two hand use, and 3 = stylus use. The mechanism described above provides the basic philosophy behind establishment of a sensor code for a physical contact parameter. An alternative mechanism of relating an activation sensor code with a physical contact parameter will be later described with reference to FIG 5-6.

A more complex array of physical contact parameters are provided in the interface database 102 in another embodiment of the system 100 when implemented in a three dimensional device that is completely enveloped by sensors. The sensors can further determine each point of contact on the device. For example, each point of contact can correlate to a specific code such as number on a three dimensional quadrant plane. Depending upon the type of contact, a series of numbers/codes can be activated in order to create a code or number sequence. This code/number sequence is an example of a sensor code that is sent by the sensor component 101 to the adaptation component 103. The number of sensor codes will depend on the total combinations and permutations of the different contact points represented on a device that are defined by a number or code. Therefore, given the size of the device, the number of code/number sequences can range from one to N number of code/number sequences where N is an integer. In turn, each code/number sequence or sensor code will correlate to a defined physical contact parameter. It should be appreciated that upper limits of the number of code/number sequences and the respectively assigned physical contact parameters can then be a limited number or an extremely high number. As mentioned above, a more detailed description of the manner in which a three dimensional device enveloped by sensors establishes a sensor code correlating to a specific physical contact parameter will be further described with reference to FIG 5-6.

In addition to physical contact parameters, the interface database can contain additional environmental parameters in order to correlate sensor signals related to environmental factors with a specific UI. In this embodiment, the sensor component can process environmental sensor signals in order to output a sensor code. Alternatively, the information relating to the environmental sensors can be added to the information pertaining to physical contact and spatial orientation sensed information in order to generate one sensor code that is sent to the interface database. The environmental parameters can also account for signals indicating device orientation derived from accelerometers. The environmental sensors can account for extrinsic factors such as atmospheric pressure, atmospheric temperature, sound, ambient light, time etc. The environmental parameters can provide factors such as increase resolution of a display, or limit the complexity of a UI in order to account for decreased physical mobility of the interactive user. The environmental parameters can be integrated into the mix of elements factored into the determination of the appropriate UI.

In addition to the variety of physical contact parameters and environmental parameters, the UI database 102 defines the variety of UI elements and interface designs pertaining to a specific device or program executable by the device. In a GUI, the UI elements consists of widgets which are visually displayed elements enabling interaction with the device, and non-interactive elements. The widgets allow for interactions appropriate to the kind of data they hold. Widgets can include small interactive elements such as buttons, toolbars, scroll menus, windows, icons, keypads etc. Larger widgets, can include windows which provide a frame or container for the main presentation content such as a web page, email message, word document, or drawing. Larger windows are primarily the output of function executed through user manipulation of smaller widgets. However larger windows can also facilitate interaction. For example, a menu displaying a variety of options for the user, can comprise of a larger window with multiple smaller icons, each representative of particular executable program that the user may access. In an exemplary embodiment of the invention, the system employs a touchscreen device with a GUI. In a touchscreen device, the user may touch upon a smaller icon to open a new window. The new window may further comprise of additional small icons for interaction with the device. The user further interacts with the device through direct manipulation of the widgets on the display. In addition to the elements of a UI that enable direct interaction for controlling a device, additional elements of the UI exist for display purposes only. For example, a video or picture or displayed message. The non-interactive elements in combination with the user input elements or widgets are organized in order to create a UI that enhances usability of the device.

The design of a UI affects the amount of effort the user must expend to provide input for the system and to interpret the output of the system, and how much effort it takes to learn how to do this. Usability is the degree to which the design of a particular UI takes into account the human psychology and physiology of the users, and makes the process of using the system effective, efficient and satisfying. Usability is mainly a characteristic of the UI. The UI of the devices employing the system 100 further accounts for the functionality of the device and the applications employed on the device. Therefore, the UI generated by the system accounts for how a device 104 is used with respect to efficiency, effectiveness, and satisfaction, while taking into account the requirements from its context of use. One example of a UI provided by the system 100 takes into account the following factors in order to enhance usability of a device: the physical placement of a user's hand on the device, how the user uses his hand in order to interact with the device, the a particular application of the device, and the environmental conditions of operation.

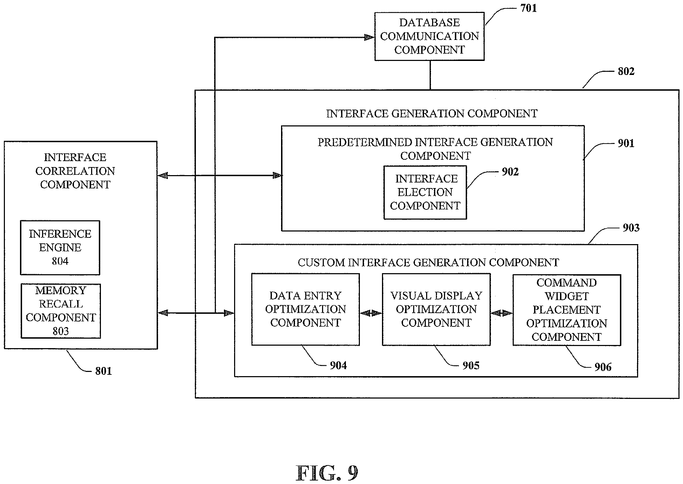

In one embodiment, the UI elements are pre-arranged in order to provide a UI that optimizes usability in response to a physical parameter. Therefore, a number of UIs can be stored in the interface database 102. Each of the stored interfaces are specifically designed with regard to a physical contact parameter or series of parameters. As with the physical contact parameters, the number of UIs stored in the interface can vary from one to a high order of magnitude. In one embodiment, a different UI can exist for each physical contact parameter. In another embodiment, several different physical contact parameters can correlate to the same UI. In another embodiment, the system can create a custom UI from UI elements in response to a specific sensor signal and corresponding physical contact or environmental parameter. In this embodiment the UI database is further employed with information pertaining to usability. As will be described supra, the system has a custom interface generation component 903 (FIG. 9) which is responsible for extrapolating usability information and relating the information with a specific physical parameter in order to generate a custom interface. Furthermore, the interface database 102 can store the newly created or custom interfaces for future implementation. The system 100 can employ a UI database 102 with capabilities of providing aspects of both a predetermined and custom interface.

In another aspect of the system 100 a specific physical parameter can correlate to a specific subset of interfaces. The subset of interfaces can be directed for implementation by a primary physical parameter. For example, a user can place his hand on a device in a specific manner that is analogous to providing the device with a unique identification code or password. The primary physical parameter related to the code in turn directs the user database to pull from a designated subset of UIs. Therefore, the interface database 102 can hold information correlating a specific physical parameter with a subset of interfaces.

This embodiment can further be exploited as a user recognition or identification mechanism where several different users utilize a specific device. In this aspect of the system 100, a user may touch a specific device in a certain way in order to signal the identification of the user. In turn, the device is signaled to operate in a specific adaptation mode wherein a certain subset of UIs correlating to the user are employed by the adaptation system 100. The user identification mechanism described above can also be utilized as a security measure similar to biometric identification of a user. Rather than recognition of a users fingerprint as in biometric identification, the device can recognize a specific touch sequence. In addition to signaling an interface subset for the user, the system can cause the device to either grant access for user or prevent the user from interacting with the device by freezing the functionality of the UI. Therefore, the UI database can further comprise of user identification information.

The system will now be explained with regard to implementation in a handheld mobile device. Several handheld mobile devices exist which are operated by the user with one hand (left or right), two hands, or no hands through manipulation by with a stylus. These devices include but are not limited to cell phones, smartphones, PDA's, mobile media players, handheld gaming devices, remote controllers, or advanced technology weapons. In one aspect of the system, the UI adapts to the manner in which the device is held. For example: when a user grips a handheld device with two hands as opposed to one, the UI can change to a design where the input widgets are located along the bottom center of the device for manipulation by the left and right thumbs respectively.

In another aspect of the invention, the handheld device may require interaction through a stylus or a keypad such as a virtual keyboard. For example, the system 100 can provide for the following sequence of events. The device can be placed on a table. When the table is the only physical contact with the device the UI can provide only non-interactive or visual elements. This UI could be considered a default interface. As the user approaches the device with a stylus, the sensor component of the system, considering it has positional and capacitive sensor capability, can process the sensed position of the stylus. In response to the corresponding physical contact parameter, the system 100 can then implement a UI that designs interactive widgets in the appropriate vicinity of the UI for interaction between the stylus and the device. Similarly, the appearance of a virtual keyboard can be a response to a physical contact parameter signaled by a sensor code designating a device that is laid on a table. Alternatively, the UI can change to provide a keyboard underneath the user's hands when he places his hands upon the device in a composition configuration. In another aspect of the invention, the appearance of a virtual keyboard could be a response to hands hovering over a device in the composition form.

In addition, the non-interactive visual elements of the device can be designed to offset the input commands in a manner that enhances the visibility of the elements. For example, the non-interactive elements can be displayed in a manner that correlates to the manner of operation and the corresponding program of use. A user can operate a device with their right hand and the input widgets can be arranged on the right side of the device in a specific configuration to enhance the control aspect of usability. Further, the specific program at use will dictate the remainder of the interface design with respect to the assigned physical contact parameter. The non-interactive elements can be designed with relation to size and aesthetic appearance of the elements in light of the specific application employed, the utility of the elements with respect to the application, or user preferences.

Additional aspects of the system 100 are brought forth through description of implementation on a larger device. In this example, the device is a large tablet PC that is used as a presentation apparatus by a salesman for displaying products to a potential customer. The tablet PC further uses a touchscreen GUI. The device is manually operated with one hand two hands or a stylus. However, in this example the salesman operates the device with his right hand only while the screen of the device is positioned in front of the customer to the left of the salesman. When the salesman holds the device with his right hand the UI automatically adapts for improved usability as a presentation model that anticipates the type of use and the physical position of the salesman and the customer. The particular UI is thus adapted for complete control of the device by the users with his thumb. In turn the user does not need to let go of the device to change hand positions or reach across the screen and interrupt the view of the customer. For instance, in accordance with this example, the UI can locate a main scroll bar for scrolling through a series of products in the top right corner of the display while the pictured products appear in the center of the display. The salesman can then scroll through products using his thumb. The UI can also be designed with a miniature version of the larger display screen at the top right corner just above the scroll bar. Therefore, rather than letting go of the device or reaching across the display screen with his left hand in order to touch upon a product appearing in the center of the screen, The salesman can simply reach above the scroll bar in order to select the desired product. The miniature display is strategically positioned above the scroll bar in order to account for the ease in which the salesman can reach up rather than down while offsetting the area of the display covered by the salesman's right palm.

In addition to mobile type handheld devices, implementation of the system 100 in larger stationary devices can further bring to light additional aspects of the system. For example, consider a device comprising a large touch screen with a GUI. One aspect of the system can recognize the position and orientation of a user's hand wherever the user places his hand on the device or wherever the hand is hovering over a device. The system can additionally distinguish between left and right hands of the user, two hands, use with a stylus or multiple hands originating from multiple users. As the user moves his hand over or upon the device, a control panel can continuously move beneath the user's hands in order to follow the users hand movements. In turn the entire UI comprising the interactive widgets and non-interactive visual components, can continuously adapt.

The embodiments of the system described above, referenced a device utilizing a GUI. However, the aspects of the system 100 described above can further be applied to a device using a HMI. For example, a device such a remote control can comprise of several non-denominational buttons. Depending on how the user holds the controller, the buttons can be assigned their respective functionality. Therefore, in essence, no matter where or how a user holds the device, the position of the users index finger can always be the position of the "start" or "play" button. Similarly, the controller could be a mobile remote control or be the control panel of a larger non-mobile device.

Furthermore, in addition to the adaptation of the UI with regards to the physical contact parameters, the UI can further account for environmental parameters. (As noted above, the term environmental parameters as used to describe the system 100 encompass parameters developed through accelerometers in addition to parameter such as temperature, ambient light, time, sound, atmospheric pressure, etc...) The UI of a handheld device can adapt depending on the amount of light, the altitude, or the temperature. For example, in a situation where temperatures indicate a fire present, a communication device employing the system can adapt the UI such that a single large emergency interactive element is displayed on a GUI. Likewise, when the interface is a HMI, all of the buttons on the device could have the same functionality, that is dialing 911. In another aspect, the system can sense an increase or decrease in environmental sound. In response, a device employing a GUI can adapt to provide a volume control element in an easily accessible position on the interface in relation to the interfacing object. Additionally, the interface can adapt according to the orientation of the device. It should be appreciated that a variety of interface adaptations in response to environmental parameters are within the scope of the invention.

The number and degree of the aspects of system 100 described above can further controlled by the user. For instance, the entire adaptability of the system can be controlled. A user can elect to use the system within a certain device to a point where they would prefer the device no longer change interfaces in response to the manner of operation. Thus the system can provide "modes" of adaptability. One mode would turn the system off completely, while another mode can allow for limited adaptability. The number of modes in which the system 100 can operate is unlimited. This aspect of the system can be appreciated with regard to the example provided above wherein the UI can continuously adapt as the user moves his hand over the GUI of a device.

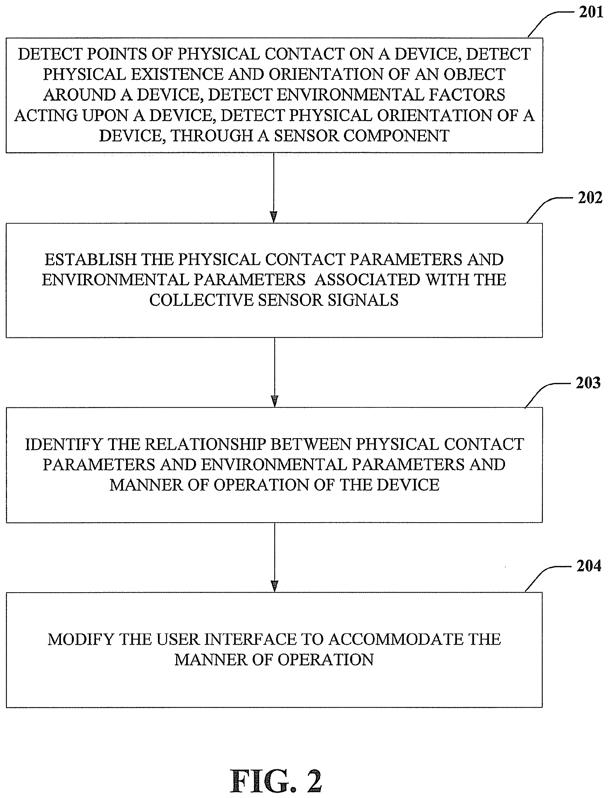

FIG. 2 presents high level flow diagram outlining the basic process by which the adaptation system 100 adapts a UI to enhance usability. At 201, the sensor component of the system detects potential sensor readings enabled by the sensor component represented by the sensors involved. As described above, the sensors can be but are not limited to capacitive sensors, spatial sensors, or environmental sensors. Thus at step 201, the system detects points of physical contact on a device, the physical existence and orientation of an object around a device, and environmental factors acting upon the device. Further, the sensor component can detect orientation of a device by way of accelerometer activation. At 202, the system correlates the sensor signals with a physical contact parameter and/or an environmental parameter. At 203 the system then identifies the relationship between the physical contact parameter and/or the environmental parameter with the manner of operation of the device. Finally, at 204 the system modifies the UI in order to accommodate the manner of operation.

FIGS. 3A and 3B relate to the sensor component 101 of the adaptation system 100. FIG. 3A details the inner components of the sensor component 102, including the sensor input receiving component 301, the sensor processing component 302, and the sensor code output component 303. The sensor input receiving component 301 comprises the actual sensors employed by the system for a specific device. The sensor signal processing component 302 interprets the activated sensors and processes the signals into a readable code recognized by the system. The sensor code output component 303 is responsible for sending the sensor code to the adaptation component for further interpretation and processing.

The sensor code generated by the sensor signal processing component 302 defines the sensor signals relating to both physical contact parameters and environmental parameters. The mechanism by which the sensor processing component establishes a code relating to physical contact parameters will be described in detail with reference to FIG. 5. Environmental parameters can be defined in general terms such as a temperature or a degree of illumination. A sensor code encompassing environmental signals can define an environmental parameter and be sent to the adaptation component as the "environmental sensor code". Alternatively, the terms defining an environmental parameter can be incorporated into the sensor code generated in regards to the physical contact parameter in order to establish one sensor code representative of all the sensor readings for a device. A system interface can thus adapt in response to a physical contact parameter, an environmental parameter, or both.

FIG. 3B depicts the method by which the sensor component 101 functions. At 304, the sensor component receives activation signals from the activated sensors. At 305 the sensor component process the activation signals in order to generate a sensor activation code, and then at 306 transmits the sensor code to the adaptation component.

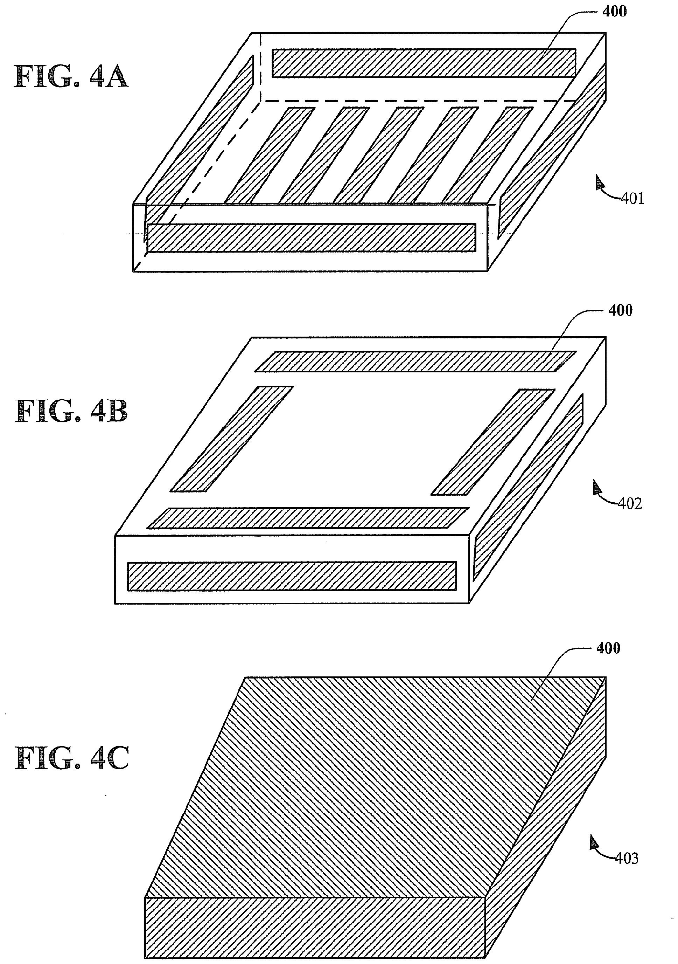

FIGS 4A - 4C illustrate possible sensor arrangements for a device in which system 100 is executed. FIGS. 4A and 4B present a device with a rectangular prism shape with sensors 400 (depicted by diagonal lines) placed on various parts of the device. FIG. 4A illustrates a sensor arrangement 401 on the bottom, and sides of the device while FIG. 4B shows an alternative arrangement 402 on the top and sides of the device. The arrangement of the sensors 400 depicted in FIGS. 4A and 4B merely provides one possible sensor configuration. It should be appreciated that sensors could be placed at any location on the device, in any form and at any number. For example, a device can only have sensors on the sides. The chosen arrangement of sensors will depend on the manner in which a particular device is used and the necessary points for signal detection in order to generate a physical and/or environmental parameter that can adequately direct the adaptation of a UI according to the manner of operation. Moreover, a particular arrangement of limited sensors may reduce cost and increase the functionality of the device. For example, a reduction in the number of sensors can equate to a reduction in size of the device or required power source for the device.

FIG. 4C illustrates another sensor arrangement 403 for the system where the device is completely enveloped by sensors 400. This arrangement can be provided by covering the device with a film that includes a wide array of sensors. In another aspect of the system 100, the device can be enveloped with a specific kind of sensor, such as a capacitive sensor, while the additional sensors, positional or thermal sensors may be integrated within or around the device in a dispersed fashion. Furthermore, although the device depicted in FIG. 4 is a rectangular prism, the system and respective sensor arrangement is applicable on any device regardless of shape.

FIG. 5 illustrates a mechanism by which the system establishes a sensor code related to the physical contact on a device and the spatial orientation of an object around the device (physical contact parameter). Both 501 and 502 present a three dimensional quadrant plain or grid. One with ordinary skill in the art understands how grids 501 and 502 establish a mathematical coordinates system. The coordinates defined by the 501 grid will have an x, y, and z value. Similarly, the coordinates defining a point on the 502 grid will comprise of an x', y', and z' value.

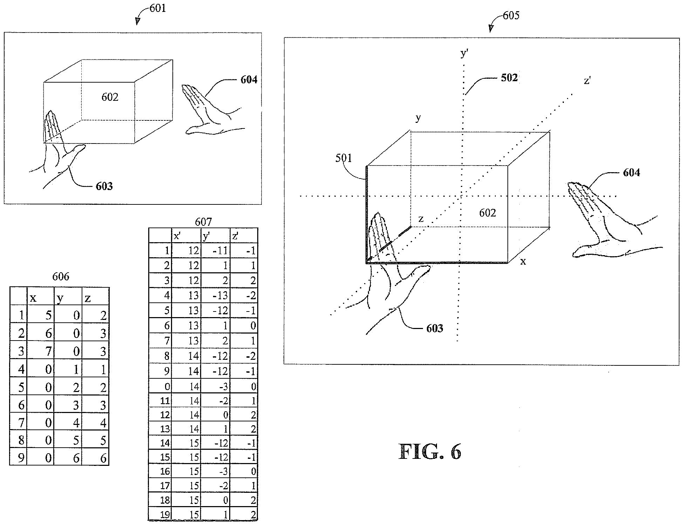

The grid at 501 is used to establish the points of actual physical contact on the device as will be exemplified with reference to FIG. 6. At 501 the grid includes an x, y and z axis. The x axis indicates points along the axis defined by a positive arithmetic sequence where x = 0 at the intersection of the x, y and z axis. The number x can comprise any number N where N is a discrete number that consecutively increases as the distance increases between its position on the x axis and the intersection point of the x, y and z axes. The number x can be a whole number or a decimal. The number of points represented along the axis although discrete can vary from a few points to a high number. The more points represented along the axis establishes a wider range of coordinates which can be used to increase the specificity of the system in determining points of contact. It should be appreciated that the y and z axis are defined in the same manner as described with reference to the x axis, where the axes represented as y and z replace the reference to the x axis. The illustration at 503 shows how the quadrant plane 501 is related to a device (depicted by the rectangular prism) employing the system 100. The range of numbers comprising the x, y and z axesis limited by the length, width and height, of the object related to the grid.

The grid at 502 comprises the same properties as the grid at 501, however, the grid at 502 is not limited by the dimensions of the device but the area around the device capable of being reached by the sensors employed. The grid at 502 further captures the spatial location and configuration of an object surrounding the device. The grid is defined by axis x', y', and z', in order to differentiate between sensor signals representative of physical touch and those representative of spatial location and configuration. Each of the axis x', y', and z', are numbered as described with reference to the 501 grid; however extension of the axis is also provided in the negative direction. The depiction at 504 shows how the grid 502 is related to a device (represented by the rectangular prism). The apex of the 502 grid is provided at the center point of the device regardless of shape.

FIG. 6 demonstrates how the grids 501 (indicated by the solid thick black lines in drawing 605) and 502 (indicated by the dotted lines at 605) function to establish the physical contact points, spatial location and configuration of an object interacting with a device employing the system. Once the points of contact and spatial location of an interfacing object are determined, all of the representative data coordinates are defined by one sensor code. The sensor processing component can provide a variety of manners for translating grid points into a computer readable code. For example, each of each coordinates generated can be represented by a binary code. Drawing 601 presents a device 602 and the location and orientation of the interfacing objects, hands A 603 and hand 604 B. Drawing 605 illustrates the location of the grids 501 and 502 with respect to the device 602 and the interfacing objects, 603 and 604.

According to one embodiment of the system wherein only capacitive sensors are present on the device, the corresponding sensor signals will be representative of only the points of physical contact of the interfacing object with the device. Referring to FIG. 6, at 601 hand A, touches the device. Grid 501 dictates the points of physical contact with the device. For illustrative purposes, grid 501 can employ a coordinates system wherein the points along the axis's are whole numbers ranging from 0 to 10 (not shown). The coordinates representative of the points at which hand A 603 touches the device are displayed in chart 606. In another aspect of the system 100 where spatial sensors are used in the device, the sensor component will generate coordinates from grid 502. It should be appreciated that a sensor code can encompass coordinates from either grid 501, 502 or both. The coordinates generated with respect to grid 502 will relate to all the physical space occupied by the interfacing object. In turn, the generated coordinates establish the form, orientation, and spatial location of the object. In FIG. 6, at 601 both hands A 603 and B 604 physically occupy space around the device. For illustrative purposes, grid 502 can employ a coordinates system wherein the points along the axes are whole numbers ranging from 0 to 20 in the positive direction and 0 to 20 in the negative direction (not shown). It should be appreciated that a larger number of coordinates will be generated with respect to the spatial, and orientation properties of the interfacing object defined by grid 502 in comparison to those related to physical contact points. For explanatory purposes, only some of the spatial/orientational coordinates generated by hand B are displayed in chart 607. (Although not shown, according to this aspect of the system hand A 603 will also generate coordinates from grid 502).

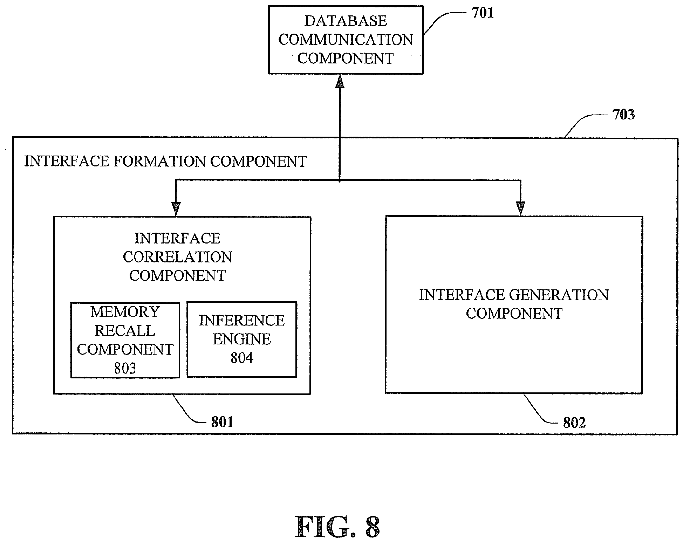

FIG. 7 illustrates an embodiment of the system 100 wherein the adaptation component 103 is further defined. The adaptation component comprises a sensor code correlation component 702, an interface formation component 703, and an interface rendering component 704. The adaptation component 103 further comprises a database communication component 701 that facilitates communication between the sensor code correlation component 702, the interface formation component 703, and the interface rendering component 704 by directing the communication between the components to the appropriate location in the interface database 102. The sensor code correlation component 702 receives sensor codes generated by the sensor component and matches the sensor code with the respective physical contact parameter and/or environmental parameter represented in the code. The sensor code correlation component 702 retrieves the physical contact and environmental parameters from the interface database 102. The interface formation component 703 receives physical contact and environmental parameters from the sensor code correlation component 702. Upon receipt, the interface formation component 703 determines the appropriate UI in response to the physical contact and/or environmental parameters. The mechanism by which the interface formation component 703 generates the UI to be applied to a device will be described supra with reference to FIGS. 8 and 9. The interface rendering component 704 applies the generated UI to the device 104. When the interface is a GUI, the interface rendering component causes the GUI to appear on a display. When the interface is a HMI, the rendering component causes the underlying functionality of the operating buttons of a device to change.

FIG. 8 further distinguishes the interface formation component 703. The interface formation component comprises an interface correlation component 801, and an interface generation component 802. The interface correlation component is responsible for receiving the physical contact and environmental parameters from the sensor code correlation component 702 and recognizing the respective UI elements and interface designs associated with the physical contact parameters and environmental parameters. A specific physical contact parameter can have one designated UI that is predetermined by the system. Alternatively, several predetermined UIs may suffice to accommodate the physical contact parameter. Furthermore, in another embodiment of the invention, all of the elements of the UI are stored in the interface database and the specific UI can be created in response to the physical contact parameter and/or environmental parameter. Therefore, the interface correlation component gathers all of the potential interface creation options.

In addition, the interface correlation component can contain a memory recall component 803. The memory recall component 803 stores information pertaining to readily used interface designs for efficient production. Likewise, given multiple applicable UIs, a user can have the option of requesting a second, third...etc. interface option following disfavor of each previously generated option. The memory recall component 803 stores the most frequently selected interface selected pertaining to a specific parameter and causes that interface option to be selected first the next time the same or related parameter is received. In another aspect of the invention, based on an incoming physical contact parameter of environmental parameter, the memory recall component can predict the upcoming physical movements by the user on or around the device based on past sequences of received parameters. Therefore the memory recall component 803 can prepare the next interface that is likely to be implemented by the system for more efficient production. Furthermore, in another aspect of the invention, where multiple users use a particular device, a subset of interfaces for that user can reside in the interface database. Upon receipt of a primary a physical contact parameter serving as the user identification code, the memory recall component 803 can be signaled to direct the interface correlation component 801 to select from a subset of interfaces assigned to that the user.

The interface correlation component can further comprise of an inference engine 804 which can employ artificial intelligence (AI) or other suitable machine learning & reasoning (MLR) logic which facilitates automating one or more features in accordance with the subject innovation. The inference engine 804 can interact with the memory recall component 803, to provide the decision logic in place of, or in addition to the inference engine 804. The subject innovation (*e.g*., in connection with drawing inferences from visual representations and attributes) can employ various AI-or MLR-based schemes for carrying out various aspects thereof. For example, a process for determining an appropriate or suitable conclusion to be drawn from a visual representation can be facilitated *via* an automatic classifier system and process.

A classifier is a function that maps an input attribute vector, x = (x1, x2, x3, x4, *xn*), to a confidence that the input belongs to a class, that is, f(x) = *confidence*(*class*). Such classification can employ a probabilistic and/or statistical-based analysis (*e.g*., factoring into the analysis utilities and costs) to prognose or infer an action that a user desires to be automatically performed.

A support vector machine (SVM) is an example of a classifier that can be employed. The SVM operates by finding a hypersurface in the space of possible inputs, which the hypersurface attempts to split the triggering criteria from the non-triggering events. Intuitively, this makes the classification correct for testing data that is near, but not identical to training data. Other directed and undirected model classification approaches include, *e.g*., naive Bayes, Bayesian networks, decision trees, neural networks, fuzzy logic models, and probabilistic classification models providing different patterns of independence can be employed. Classification as used herein also is inclusive of statistical regression that is utilized to develop models of priority.

As will be readily appreciated from the subject specification, the subject innovation can employ classifiers that are explicitly trained (*e.g., via* a generic training data) as well as implicitly trained (*e.g., via* observing user behavior, receiving extrinsic information). For example, SVM's are configured *via* a learning or training phase within a classifier constructor and feature selection module. Thus, the classifier(s) can be used to automatically learn and perform a number of functions, including but not limited to determining according to predetermined criteria what conclusion(s) (or inferences) to draw based upon a combination of data parameters and/or characteristics.

The interface generation component, 802 is detailed in FIG. 9. The interface generation component comprises a predetermined interface generation component (PIGC) 901 and a custom interface generation component (CIGC) 903. The PIGC 901 is responsible for generating all predetermined interfaces. When only one predetermined interface is associated with a specific parameter, the PIGC simply generates the one interface gathered by the interface correlation component 801. However, when several UIs pertain to a specific physical contact parameter or environmental parameter, the PIGC can elect the most appropriate interface. The most appropriate interface can be classified as such based upon an ordering scheme where the various interfaces gathered for a specific parameter in the interface correlation component 801 are ranked. Alternatively, the interface election component 902 can elect the interface design initiated by the memory recall component 803. The determination of which interface to elect can be based upon user information stored in the interface database.

The CIGC is responsible for generating custom interfaces from the interface elements gathered in the interface correlation component 801 in response to a physical contact parameter of environmental parameter. The interface elements include all interactive elements or input widgets and all non-interactive elements such as visual widgets. The CIGC component designs a custom interface with the various elements in consideration of rules governing usability held in the interface database or base. In another embodiment the CIGC can create a custom interface influenced by the memory recall component 803 and/or the inference engine 804, either in addition to or in the alternative of utilizing rules. In yet another embodiment of the system 100 as depicted in FIG. 9, the CIGC can contain separate components such as a data entry optimization component 904, a visual display optimization component 905, and a command widget placement optimization component 906. Each of the above component can work together to design the optimal UI based on their respective roles as designated by their names. According to this embodiment, the data entry optimization component 904 is responsible for keypad/keyboard location and design relative to the physical contact parameter and/or environmental parameter. The visual display optimization component 905 can optimize the organization and size of the various non-interactive component in response to the organization of the interactive components. The command widget placement component 906 can further optimize the placement of particular command widgets. In another aspect of the invention, the CIGC 903 can direct the interface database to store the custom created interfaces for later use. Furthermore, another aspect of the invention allows both the PIGC 901 and the CIGC 903 to determine the appropriate UI to apply, either a predetermined UI or a custom designed interface (including the requisite elements) through indication by the inference engine 804.

In accordance with the various methods of generating a UI, an implementation scheme (*e.g*., rule) can be applied to define and/or implement a set of criteria by which conclusions are drawn. It will be appreciated that the rule-based implementation can automatically and/or dynamically define conclusions to be drawn from a specific set of information or attributes. In response thereto, the rule-based implementation can make determinations by employing a predefined and/or programmed rule(s) based upon most any desired criteria. It is to be understood that rules can be preprogrammed by a user or alternatively, can be built by the system on behalf of the user. Additionally, the system adaptation component 103 can 'learn' or 'be trained' by actions of a user or group of users.

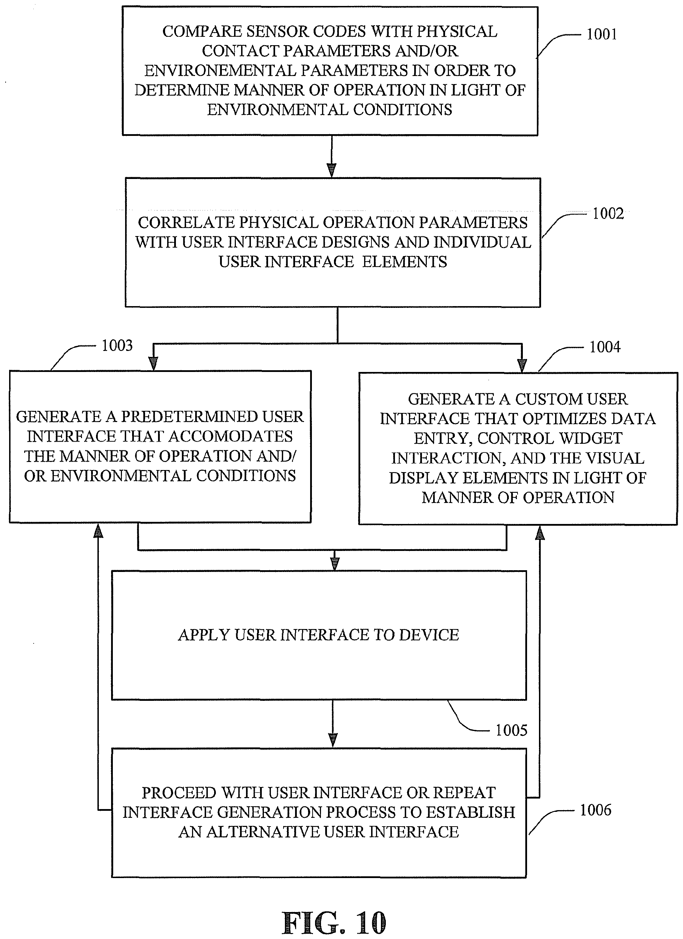

Referring back to the drawings, FIG. 10 presents a flow diagram detailing the method by which the system 100 adaptation component 103 modifies a UI in response to manner of operation of a device in consideration of environmental parameters. At 1001 the adaptation component compares sensor codes with physical contact parameters and/or environmental parameters in order to determine the manner of operation of a device in light of environmental conditions. At 1002 the adaptation component correlates the physical operation parameters with UI designs and individual user elements. Next, the adaptation component can either generate a predetermined UI 1003, or a custom interface 1004, according to instructions outlined in the interface database. The interface generated will be designed to increase usability. At 1005 the interface is applied to the device. Finally, the user may elect to proceed with the applied interface or change the interface as depicted by step 1006. Upon election to change the interface, the adaptation component repeats the interface generation process at steps 1003 - 1004.

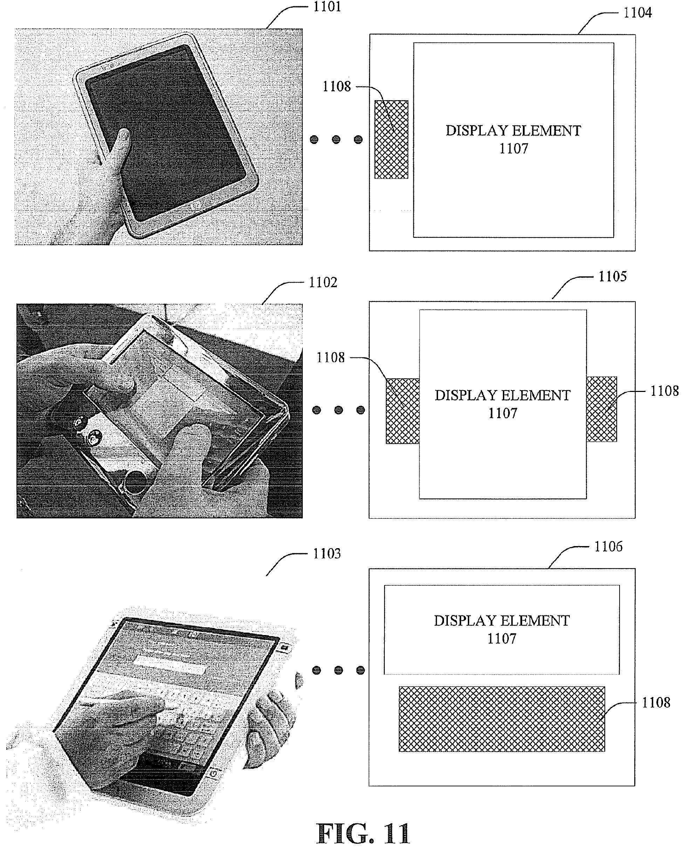

Referring now to FIG. 11, illustrated are three devices 1101-1103 being used in three different manners by a user. Each of the devices consists of a touchscreen display employing a GUI. As depicted, each device is a different device in kind, shape, size, and functionality. Consequentially, each device is operated in a different manner. The device at 1101 is operated with the left hand, the device at 1102 with the left and right thumbs, and the device at 1103 is held in the users left forearm and operated with a stylus. In order to further describe the aspects of the system 100, consider an example wherein each device in 1101 - 1103 is the same device, having a variety of functionalities and operated in a variety of manners depicted in 1101 - 1103. (Given that each depicted device is a portable tablet PC, each device can be operated in every manner depicted in 1101 - 1103). When the user operates the device as depicted at 1101, the applied UI in response to the sensor codes generated is depicted at 1104. 1104 depicts a UI wherein the display element 1107 accounts for the majority of the display screen and the interactive elements 1108 appear in a concentrated area to the left of the display screen where the user places his thumb. Next at 1102, when the device is operated with two hands, the UI can automatically adapt to the new manner of operation and present the display elements 1107 and interactive elements accordingly as represented at 1105. Further, when the user operates the device as shown in 1103 the interface adapts to the design depicted at 1106. As show in 1104-1106, each of the interfaces accounts for the associated manner of operation in order to provide the interactive elements 1108 in easily accessible locations while optimizing the display elements 1107. In this example if the device did not employ the system 100, the UI would not adapt in response to the manner of operation. Generally, where the system is not employed, the UI either remains constant, or is modified in response to a manual request to change the interface, or the application employed (not shown). It should be appreciated that the interfaces depicted in 1104-1106 are simple examples of interface designs used for illustrative purposes.

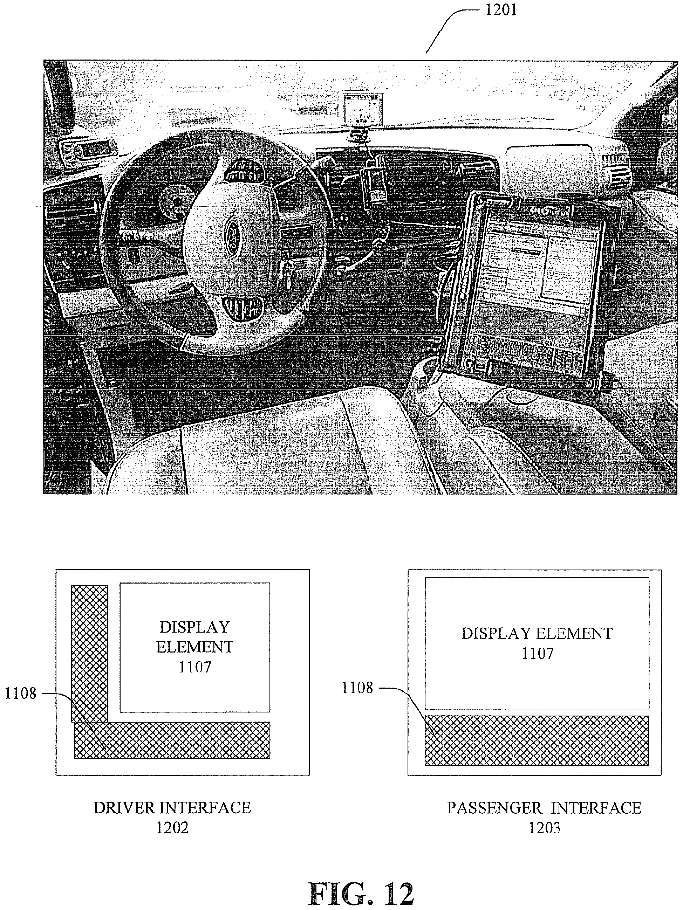

FIG. 12 provides an additional application of the system. 1201 illustrates a computer device located in the center console of a car. According to an embodiment of the invention, the device can express a specific UI 1202 accommodating the driver. As the driver operates the car, he may interface with the device by way of his right hand or a stylus. The interface can take into consideration additional factors such as speed, time of day, sound, etc. The UI 1202 adapts to enhance the usability of the driver. Further, the device depicted in 1201 can also be rotated to face the passenger or removed from the consol to lay on the passenger's lap. In any event, the manner of operation of the device by the passenger will vary from that of the driver where the passenger is not restricted by the operation of the car. Therefore, the UI 1203 of the device can automatically adapt to accommodate the manner of operation by the passenger. In another aspect of the invention, the interface can adapt to environmental factors in addition to manner of operation, for example, the speed of the car or the altitude of the vehicle. Under varying environmental conditions, such as increased speed, the user may desire a simplified UI for easier interaction with the device. As mentioned infra, a wide variety of interface can be generated by the system considering the type of device, the sensors employed, the applications and functions available, the manner of operation, the condition of operation etc.

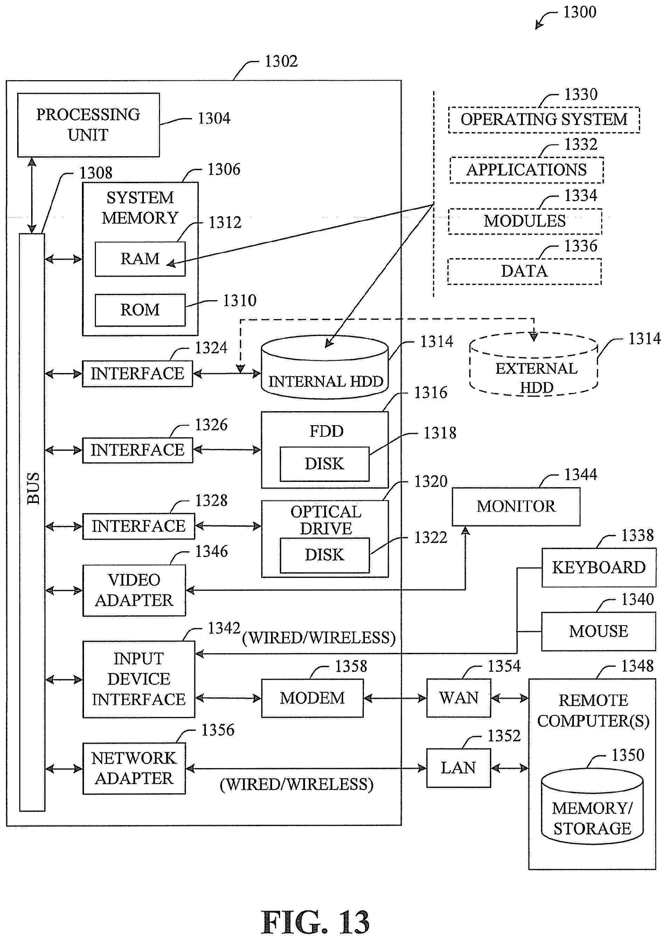

Referring now to FIG. 13, illustrated is a block diagram of a computer operable to execute the disclosed architecture. In order to provide additional context for various aspects of the subject innovation, FIG. 13 and the following discussion are intended to provide a brief, general description of a suitable computing environment 1300 in which the various aspects of the innovation can be implemented. While the innovation has been described above in the general context of computer-executable instructions that may run on one or more computers, those skilled in the art will recognize that the innovation also can be implemented in combination with other program modules and/or as a combination of hardware and software.

Generally, program modules include routines, programs, components, data structures, *etc.,* that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the innovation may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer-readable media can comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 13, the exemplary environment 1300 for implementing various aspects of the innovation includes a computer 1302, the computer 1302 including a processing unit 1304, a system memory 1306 and a system bus 1308. The system bus 1308 couples system components including, but not limited to, the system memory 1306 to the processing unit 1304. The processing unit 1304 can be any of various commercially available processors. Dual microprocessors and other multi-processor architectures may also be employed as the processing unit 1304.

The system bus 1308 can be any of several types of bus structure that may further interconnect to a memory bus (with or without a memory controller), a peripheral bus, and a local bus using any of a variety of commercially available bus architectures. The system memory 1306 includes read-only memory (ROM) 1310 and random access memory (RAM) 1312. A basic input/output system (BIOS) is stored in a non-volatile memory 1310 such as ROM, EPROM, EEPROM, which BIOS contains the basic routines that help to transfer information between elements within the computer 1302, such as during start-up. The RAM 1312 can also include a high-speed RAM such as static RAM for caching data.

The computer 1302 further includes an internal hard disk drive (HDD) 1314 (*e.g.,* EIDE, SATA), which internal hard disk drive 1314 may also be configured for external use in a suitable chassis (not shown), a magnetic floppy disk drive (FDD) 1316, (*e.g.,* to read from or write to a removable diskette 1318) and an optical disk drive 1320, (*e.g.,* reading a CD-ROM disk 1322 or, to read from or write to other high capacity optical media such as the DVD). The hard disk drive 1314, magnetic disk drive 1316 and optical disk drive 1320 can be connected to the system bus 1308 by a hard disk drive interface 1324, a magnetic disk drive interface 1326 and an optical drive interface 1328, respectively. The interface 1324 for external drive implementations includes at least one or both of Universal Serial Bus (USB) and IEEE 13134 interface technologies. Other external drive connection technologies are within contemplation of the subject innovation.

The drives and their associated computer-readable media provide nonvolatile storage of data, data structures, computer-executable instructions, and so forth. For the computer 1302, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the innovation.

A number of program modules can be stored in the drives and RAM 1312, including an operating system 1330, one or more application programs 1332, other program modules 1334 and program data 1336. All or portions of the operating system, applications, modules, and/or data can also be cached in the RAM 1312. It is appreciated that the innovation can be implemented with various commercially available operating systems or combinations of operating systems.

A user can enter commands and information into the computer 1302 through one or more wired/wireless input devices, *e.g.,* a keyboard 1338 and a pointing device, such as a mouse 1340. Other input devices (not shown) may include a microphone, an IR remote control, a joystick, a game pad, a stylus pen, touch screen, or the like. These and other input devices are often connected to the processing unit 1304 through an input device interface 1342 that is coupled to the system bus 1308, but can be connected by other interfaces, such as a parallel port, an IEEE 13134 serial port, a game port, a USB port, an IR interface, *etc.*

A monitor 1344 or other type of display device is also connected to the system bus 1308 *via* an interface, such as a video adapter 1346. In addition to the monitor 1344, a computer typically includes other peripheral output devices (not shown), such as speakers, printers, *etc.*

The computer 1302 may operate in a networked environment using logical connections *via* wired and/or wireless communications to one or more remote computers, such as a remote computer(s) 1348. The remote computer(s) 1348 can be a workstation, a server computer, a router, a personal computer, portable computer, microprocessor-based entertainment appliance, a peer device or other common network node, and typically includes many or all of the elements described relative to the computer 1302, although, for purposes of brevity, only a memory/storage device 1350 is illustrated. The logical connections depicted include wired/wireless connectivity to a local area network (LAN) 1352 and/or larger networks, e.g., a wide area network (WAN) 1354. Such LAN and WAN networking environments are commonplace in offices and companies, and facilitate enterprise-wide computer networks, such as intranets, all of which may connect to a global communications network, *e.g*., the Internet.

When used in a LAN networking environment, the computer 1302 is connected to the local network 1352 through a wired and/or wireless communication network interface or adapter 1356. The adapter 1356 may facilitate wired or wireless communication to the LAN 1352, which may also include a wireless access point disposed thereon for communicating with the wireless adapter 1356.

When used in a WAN networking environment, the computer 1302 can include a modem 1358, or is connected to a communications server on the WAN 1354, or has other means for establishing communications over the WAN 1354, such as by way of the Internet. The modem 1358, which can be internal or external and a wired or wireless device, is connected to the system bus 1308 *via* the serial port interface 1342. In a networked environment, program modules depicted relative to the computer 1302, or portions thereof, can be stored in the remote memory/storage device 1350. It will be appreciated that the network connections shown are exemplary and other means of establishing a communications link between the computers can be used.

The computer 1302 is operable to communicate with any wireless devices or entities operatively disposed in wireless communication, e.g., a printer, scanner, desktop and/or portable computer, portable data assistant, communications satellite, any piece of equipment or location associated with a wirelessly detectable tag (*e.g.,* a kiosk, news stand, restroom), and telephone. This includes at least Wi-Fi and Bluetooth™ wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, *e.g*., computers, to send and receive data indoors and out; anywhere within the range of a base station. Wi-Fi networks use radio technologies called IEEE 802.11 (a, b, g, *etc.*) to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11a) or 54 Mbps (802.11b) data rate, for example, or with products that contain both bands (dual band), so the networks can provide real-world performance similar to the basic 10BaseT wired Ethernet networks used in many offices.

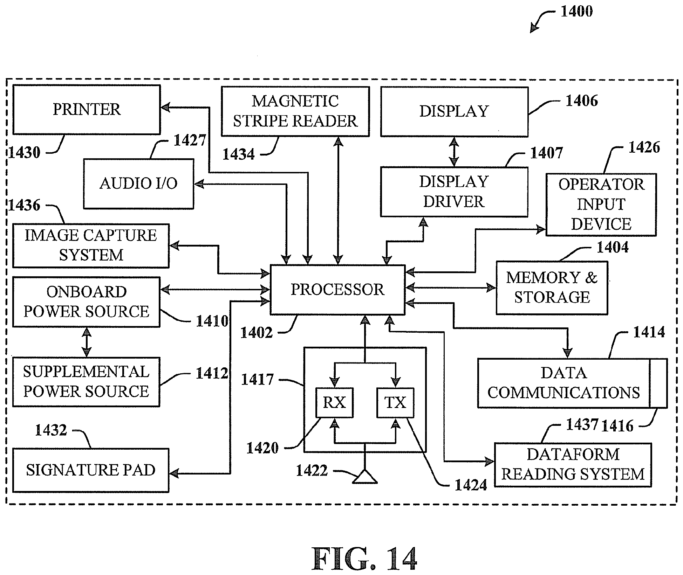

Referring now to FIG. 14, illustrated is a schematic block diagram of a portable hand-held terminal device 1400 according to one aspect of the invention, in which a processor 1402 is responsible for controlling the general operation of the device 1400. The processor 1402 is programmed to control and operate the various components within the device 1400 in order to carry out the various functions described herein. The processor 1402 can be any of a plurality of suitable processors. The manner in which the processor 1402 can be programmed to carry out the functions relating to the invention will be readily apparent to those having ordinary skill in the art based on the description provided herein.

A memory 1404 connected to the processor 1402 serves to store program code executed by the processor 1402, and serves as a storage means for storing information such as user credential and receipt transaction information and the like. The memory 1404 can be a nonvolatile memory suitably adapted to store at least a complete set of the information that is displayed. Thus, the memory 1404 can include a RAM or flash memory for high-speed access by the processor 1402 and/or a mass storage memory, *e.g*., a micro drive capable of storing gigabytes of data that comprises text, images, audio, and video content. According to one aspect, the memory 1404 has sufficient storage capacity to store multiple sets of information, and the processor 1402 could include a program for alternating or cycling between various sets of display information.

A display 1406 is coupled to the processor 1402 *via* a display driver system 1407. The display 1406 can be a color liquid crystal display (LCD), plasma display, or the like. In this example, the display 1406 is a ¼ VGA display with sixteen levels of gray scale. The display 1406 functions to present data, graphics, or other information content. For example, the display 1406 can display a set of customer information, which is displayed to the operator and can be transmitted over a system backbone (not shown). Additionally, the display 1406 can display a variety of functions that control the execution of the device 1400. The display 1406 is capable of displaying both alphanumeric and graphical characters.

Power is provided to the processor 1402 and other components forming the hand-held device 1400 by an onboard power system 1410 (*e.g.,* a battery pack). In the event that the power system 1410 fails or becomes disconnected from the device 1400, a supplemental power source 1412 can be employed to provide power to the processor 1402 and to charge the onboard power system 1410. The processor 1402 of the device 1400 induces a sleep mode to reduce the current draw upon detection of an anticipated power failure.

The terminal 1400 includes a communication subsystem 1414 that includes a data communication port 1416, which is employed to interface the processor 1402 with a remote computer. The port 1416 can include at least one of Universal Serial Bus (USB) and IEEE 13134 serial communications capabilities. Other technologies can also be included, for example, infrared communication utilizing an infrared data port.

The device 1400 can also include a radio frequency (RF) transceiver section 1417 in operative communication with the processor 1402. The RF section 1417 includes an RF receiver 1420, which receives RF signals from a remote device *via* an antenna 1422 and demodulates the signal to obtain digital information modulated therein. The RF section 1417 also includes an RF transmitter 1424 for transmitting information to a remote device, for example, in response to manual user input *via* a user input device 1426 (*e.g.,* a keypad) or automatically in response to the completion of a transaction or other predetermined and programmed criteria. The transceiver section 1417 facilitates communication with a transponder system, for example, either passive or active, that is in use with product or item RF tags. The processor 1402 signals (or pulses) the remote transponder system *via* the transceiver 1417, and detects the return signal in order to read the contents of the tag memory. In one implementation, the RF section 1417 further facilitates telephone communications using the device 1400. In furtherance thereof, an audio I/O section 1427 is provided as controlled by the processor 1402 to process voice input from a microphone (or similar audio input device) and audio output signals (from a speaker or similar audio output device).

In another implementation, the device 1400 can provide voice recognition capabilities such that when the device 1400 is used simply as a voice recorder, the processor 1402 can facilitate high-speed conversion of the voice signals into text content for local editing and review, and/or later download to a remote system, such as a computer word processor. Similarly, the converted voice signals can be used to control the device 1400 instead of using manual entry *via* the keypad 1426.

Onboard peripheral devices, such as a printer 1430, signature pad 1432, and a magnetic strip reader 1434 can also be provided within the housing of the device 1400 or accommodated externally through one or more of the external port interfaces 1416.

The device 1400 can also include an image capture system 1436 such that the user can record images and/or short movies for storage by the device 1400 and presentation by the display 1406. Additionally, a dataform reading system 1437 is included for scanning dataforms. It is to be appreciated that these imaging systems (1436 and 1437) can be a single system capable of performing both functions.

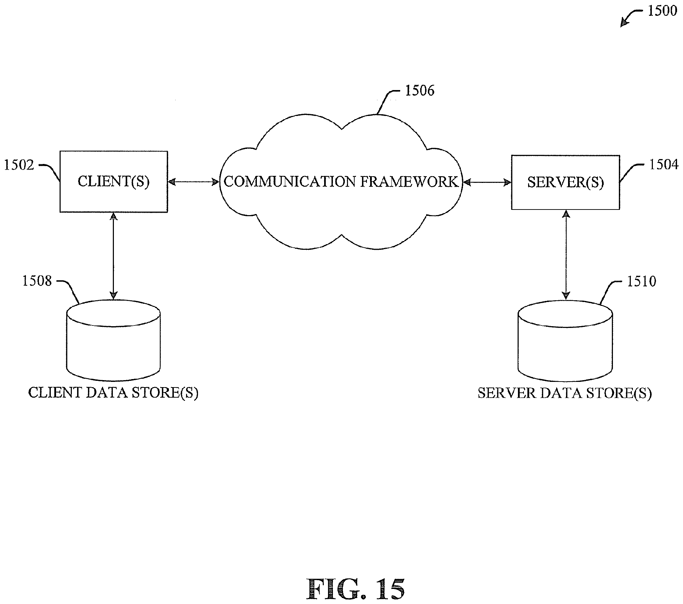

Referring now to FIG. 15, there is illustrated a schematic block diagram of an exemplary computing environment 1500 in accordance with the subject innovation. The system 1500 includes one or more client(s) 1502. The client(s) 1502 can be hardware and/or software (*e.g*., threads, processes, computing devices). The client(s) 1502 can house cookie(s) and/or associated contextual information by employing the innovation, for example.

The system 1500 also includes one or more server(s) 1504. The server(s) 1504 can also be hardware and/or software (*e.g*., threads, processes, computing devices). The servers 1504 can house threads to perform transformations by employing the innovation, for example. One possible communication between a client 1502 and a server 1504 can be in the form of a data packet adapted to be transmitted between two or more computer processes. The data packet may include a cookie and/or associated contextual information, for example. The system 1500 includes a communication framework 1506 (*e.g.,* a global communication network such as the Internet) that can be employed to facilitate communications between the client(s) 1502 and the server(s) 1504.

Communications can be facilitated *via* a wired (including optical fiber) and/or wireless technology. The client(s) 1502 are operatively connected to one or more client data store(s) 1508 that can be employed to store information local to the client(s) 1502 (*e.g.,* cookie(s) and/or associated contextual information). Similarly, the server(s) 1504 are operatively connected to one or more server data store(s) 1510 that can be employed to store information local to the servers 1504.

What has been described above includes examples of the innovation. It is, of course, not possible to describe every conceivable combination of components or methodologies for purposes of describing the subject innovation, but one of ordinary skill in the art may recognize that many further combinations and permutations of the innovation are possible.

## Claims

1. A system (100) for automatically adapting a graphical user interface, GUI, of a device (104), the GUI comprising one or more interactive elements and non-interactive elements, the system comprising:
a sensor component (101) configured to collect data regarding physical interaction with the device (104) and to generate a sensor code based on the collected data, the collected data representing a position and a size of a first interacting object (603) contacting the device (104) and a spatial orientation of a second interacting object (604) surrounding the device (104) without touching the device (104), the spatial orientation being detected by spatial sensors comprised by the sensor component (101);
a database (102) configured to store the generated sensor code, the database (102) serving as a look-up table for correlating the generated sensor code with a corresponding physical contact parameter, the physical contact parameter relating to a particular manner of operating the device (104); and
an adaptation component (103; 702) configured to match the generated sensor code with the respective physical contact parameter retrieved from the database (102), to analyze the physical contact parameter and to modify the graphical user interface as a function of the physical contact parameter to optimize the interaction with the device, wherein the modifying the graphical user interface comprises modifying an arrangement of at least one of the one or more interactive elements or the non-interactive elements of the GUI; and wherein
the physical contact parameter encompasses a distance of the second interacting object (604) from the device (104).

2. The system of claim 1, wherein the physical contact parameter encompasses the orientation of the second interacting object (604) around the device (104).

3. The system of claim 1, wherein the sensor component (101) is configured to use an invisible three-dimensional grid existing in the space surrounding the device (104) for transcribing a code accounting for the spatial position of the second interacting object (604) around the device (104).

4. The system of claim 1, wherein the physical contact parameter defines a relationship between one or more contact points of the first interacting object (603) contacting the device (104) and a type of the first interacting object (603) contacting the device (104).

5. The system of claim 1, wherein the adaptation component is further configured to modify the graphical user interface as a function of an operation mode, wherein the operation mode comprises operating the device (104) with a left hand of a single user, a right hand of a single user, both hands of a single user, multiple hands of more than one user, one finger of a single user, or multiple fingers of a single user.

6. The system of claim 1, wherein the adaptation component is further configured to modify the GUI as a function of historical data, wherein the historical data comprises previously collected data.

7. The system of claim 1, wherein the adaptation component is further configured to modify the GUI as a function of physical characteristics of one or more of a user's fingers and a specific spatial configuration of the one or more of the user's fingers.

8. The system of claim 1, wherein the adaptation component is further configured to modify the GUI as a function of at least one of temperature, ambient light, atmospheric pressure, sound, wind, or time.

9. The system of claim 1, wherein the adaptation component is further configured to transition the GUI as a user modifies a manner in which one or more of a user's fingers interact with the device.

10. The system of claim 1, wherein the sensor component (101) comprises at least one of: one or more capacitive sensors, one or more resistive sensors, one or more pressure sensors one or more positional sensors, one or more inductive sensors, one or more thermal sensors one or more optical sensors, one or more laser sensors, one or more gyroscopic sensors, one or more infrared sensors, one or more electromagnetic sensors, one or more biometric sensors, one or more vibratory sensors, one or more acoustic sensors, or one or more accelerometers.

11. A method for automatically adapting a graphical user interface, GUI, of a device (104), the GUI comprising one or more interactive elements and non-interactive elements, the method comprising the following steps:
collecting with a sensor component (101) comprised by the device (104) data regarding physical interaction with the device (104) and generating a sensor code based on the collected data, the collected data representing a position and a size of a first interacting object (603) contacting the device (104) and a spatial orientation of a second interacting object (604) surrounding the device (104) without touching the device (104), the spatial orientation being detected by spatial sensors comprised by the sensor component (101);
storing the generated sensor code in a database (102), the database (102) serving as a look-up table for correlating the generated sensor code with a corresponding physical contact parameter, the physical contact parameter relating to a particular manner of operating the device (104); and
matching the generated sensor code with the respective physical contact parameter retrieved from the database (102), analyzing the physical contact parameter and modifying the graphical user interface as a function of the physical contact parameter to optimize the interaction with the device, wherein the modifying the graphical user interface comprises modifying an arrangement of at least one of the one or more interactive elements or the non-interactive elements of the GUI; and wherein
the physical contact parameter encompasses a distance of the second interacting object (604) from the device (104).

12. The method of claim 11, wherein the collected data also comprises an orientation of the device (104).

13. The method of claim 11, wherein the physical contact parameter encompasses the orientation of the second interacting object (604) around the device (104).

14. The method of claim 11, further comprising using an invisible three-dimensional grid existing in the space surrounding the device for transcribing a code accounting for the spatial position of the second interacting object (604) around the device (104).

15. The method of claim 11, wherein the physical contact parameter defines a relationship between one or more contact points of the first interacting object (603) contacting the device (104) and a type of the first interacting object (603) contacting the device (104).

16. The method of claim 11, further comprising determining whether the device (104) is operated by a left hand, a right hand, both hands of a single user, multiple hands of more than one user, one finger, or multiple fingers, and modifying the GUI in response

17. The method of claim 11, further comprising using previously collected data of a user of the device (104) and modifying the GUI inresponse.

18. The method of claim 11, further comprising modifying the GUI as a function of a size and a shape of one or more of a user's fingers and a manner in which the one or more fingers function in a specific spatial configuration.

19. The method of claim 11, further comprising analyzing the collected sensor data and modifying the GUI based upon a user state or a device state.

20. The method of claim 11, further comprising sensing at least one parameter of: pressure, resistance, orientation, vibration, biometrics, temperature, ambient light, sound, or wind, and modifying the GUI as a function of the sensed parameter.

## Patentansprüche

1. System (100) zum automatischen Anpassen einer grafischen Benutzerschnittstelle, GUI, einer Vorrichtung (104), wobei die GUI ein oder mehrere interaktive Elemente und nicht interaktive Elemente umfasst, wobei das System Folgendes umfasst:
ein Sensorbauteil (101), das konfiguriert ist, um Daten über eine physische Interaktion mit der Vorrichtung (104) zu erheben und basierend auf den erhobenen Daten einen Sensorcode zu generieren, wobei die erhobenen Daten eine Position und eine Größe eines ersten interagierenden Objekts (603), das die Vorrichtung (104) berührt, und eine räumliche Orientierung eines zweiten interagierenden Objekts (604), das die Vorrichtung (104) umgibt, ohne die Vorrichtung (104) zu berühren, darstellen, wobei die räumliche Orientierung durch räumliche Sensoren detektiert wird, die in dem Sensorbauteil (101) enthalten sind;
eine Datenbank (102), die konfiguriert ist, um den generierten Sensorcode zu speichern, wobei die Datenbank (102) als Suchtabelle dient, um den generierten Sensorcode mit einem entsprechenden physischen Kontaktparameter zu korrelieren, wobei der physische Kontaktparameter die bestimmte Art der Betätigung der Vorrichtung (104) betrifft; und
ein Anpassungsbauteil (103; 702), das konfiguriert ist, um den generierten Sensorcode mit dem jeweiligen physischen Kontaktparameter, der aus der Datenbank (102) abgerufen wird, abzugleichen, um den physischen Kontaktparameter zu analysieren und die grafische Benutzerschnittstelle in Abhängigkeit von dem physischen Kontaktparameter zu ändern, um die Interaktion mit der Vorrichtung zu optimieren, wobei das Ändern der grafischen Benutzerschnittstelle das Ändern einer Anordnung von mindestens einem von dem einen oder den mehreren interaktiven Elementen oder nicht interaktiven Elementen der GUI umfasst; und wobei
der physische Kontaktparameter einen Abstand des zweiten interagierenden Objekts (604) von der Vorrichtung (104) einbezieht.

2. System nach Anspruch 1, wobei der physische Kontaktparameter die Orientierung des zweiten interagierenden Objekts (604) um die Vorrichtung (104) herum einbezieht.

3. System nach Anspruch 1, wobei das Sensorbauteil (101) konfiguriert ist, um ein unsichtbares dreidimensionales Raster zu verwenden, das in dem Raum, der die Vorrichtung (104) umgibt, existiert, um einen Code umzuschreiben, der die räumliche Position des zweiten interagierenden Objekts (604) um die Vorrichtung (104) herum erfasst.

4. System nach Anspruch 1, wobei der physische Kontaktparameter eine Beziehung zwischen einem oder mehreren Kontaktpunkten des ersten interagierenden Objekts (603), das die Vorrichtung (104) berührt, und einer Art des ersten interagierenden Objekts (603), das die Vorrichtung (104) berührt, definiert.

5. System nach Anspruch 1, wobei das Anpassungsbauteil ferner konfiguriert ist, um die grafische Benutzerschnittstelle in Abhängigkeit von einem Betriebsmodus zu ändern, wobei der Betriebsmodus das Betätigen der Vorrichtung (104) mit der linken Hand eines einzigen Benutzers, der rechten Hand eines einzigen Benutzers, den beiden Händen eines einzigen Benutzers, mehreren Händen von mehr als einem Benutzer, einem Finger eines einzigen Benutzers oder mehreren Fingern eines einzigen Benutzers umfasst.

6. System nach Anspruch 1, wobei das Anpassungsbauteil ferner konfiguriert ist, um die GUI in Abhängigkeit von früheren Daten zu ändern, wobei die früheren Daten zuvor erhobene Daten umfassen.

7. System nach Anspruch 1, wobei das Anpassungsbauteil ferner konfiguriert ist, um die GUI in Abhängigkeit von körperlichen Eigenschaften eines oder mehrerer der Finger eines Benutzers und einer spezifischen räumlichen Konfiguration des einen oder der mehreren Finger des Benutzers zu ändern.

8. System nach Anspruch 1, wobei das Anpassungsbauteil ferner konfiguriert ist, um die GUI in Abhängigkeit von mindestens einem von Temperatur, Umgebungslicht, Atmosphärendruck, Geräuschen, Wind oder Zeit zu ändern.

9. System nach Anspruch 1, wobei das Anpassungsbauteil ferner konfiguriert ist, um die GUI umzuschalten, wenn ein Benutzer ändert, wie ein oder mehrere Finger eines Benutzers mit der Vorrichtung interagiert bzw. interagieren.

10. System nach Anspruch 1, wobei das Sensorbauteil (101) mindestens eines umfasst von: einem oder mehreren kapazitiven Sensoren, einem oder mehreren resistiven Sensoren, einem oder mehreren Drucksensoren, einem oder mehreren Positionssensoren, einem oder mehreren induktiven Sensoren, einem oder mehreren Wärmesensoren, einem oder mehreren optischen Sensoren, einem oder mehreren Lasersensoren, einem oder mehreren gyroskopischen Sensoren, einem oder mehreren Infrarotsensoren, einem oder mehreren elektromagnetischen Sensoren, einem oder mehreren biometrischen Sensoren, einem oder mehreren Schwingungssensoren, einem oder mehreren akustischen Sensoren oder einem oder mehreren Beschleunigungsmessern.

11. Verfahren zum automatischen Anpassen einer grafischen Benutzerschnittstelle, GUI, einer Vorrichtung (104), wobei die GUI ein oder mehrere interaktive Elemente und nicht interaktive Elemente umfasst, wobei das Verfahren die folgenden Schritte umfasst:
Erheben mit einem Sensorbauteil (101), das in der Vorrichtung (104) enthalten ist, von Daten über die physische Interaktion mit der Vorrichtung (104) und Generieren eines Sensorcodes basierend auf den erhobenen Daten, wobei die erhobenen Daten eine Position und eine Größe eines ersten interagierenden Objekts (603), das die Vorrichtung (104) berührt, und eine räumliche Orientierung eines zweiten interagierenden Objekts (604), das die Vorrichtung (104) umgibt, ohne die Vorrichtung (104) zu berühren, darstellen, wobei die räumliche Orientierung durch räumliche Sensoren, die in dem Sensorbauteil (101) enthalten sind, detektiert wird;
Speichern des generierten Sensorcodes in einer Datenbank (102), wobei die Datenbank (102) als Suchtabelle dient, um den generierten Sensorcode mit einem entsprechenden physischen Kontaktparameter zu korrelieren, wobei der physische Kontaktparameter eine bestimmte Art der Betätigung der Vorrichtung (104) betrifft; und
Abgleichen des generierten Sensorcodes mit dem jeweiligen physischen Kontaktparameter, der aus der Datenbank (102) abgerufen wird, Analysieren des physischen Kontaktparameters und Ändern der grafischen Benutzerschnittstelle in Abhängigkeit von dem physischen Kontaktparameter, um die Interaktion mit der Vorrichtung zu optimieren, wobei das Ändern der grafischen Benutzerschnittstelle das Ändern einer Anordnung von mindestens einem von dem einen oder den mehreren interaktiven Elementen oder den nicht interaktiven Elementen der GUI umfasst; und wobei
der physische Kontaktparameter einen Abstand des zweiten interagierenden Objekts (604) von der Vorrichtung (104) einbezieht.

12. Verfahren nach Anspruch 11, wobei die erhobenen Daten auch eine Orientierung der Vorrichtung (104) umfassen.

13. Verfahren nach Anspruch 11, wobei der physische Kontaktparameter die Orientierung des zweiten interagierenden Objekts (604) um die Vorrichtung (104) herum einbezieht.

14. Verfahren nach Anspruch 11, ferner umfassend das Verwenden eines unsichtbaren dreidimensionalen Rasters, das in dem Raum, der die Vorrichtung umgibt, existiert, um einen Code umzuschreiben, der die räumliche Position des zweiten interagierenden Objekts (604) um die Vorrichtung (104) herum erfasst.

15. Verfahren nach Anspruch 11, wobei der physische Kontaktparameter eine Beziehung zwischen einem oder mehreren Kontaktpunkten des ersten interagierenden Objekts (603), das die Vorrichtung (104) berührt, und einer Art des ersten interagierenden Objekts (603), das die Vorrichtung (104) berührt, definiert.

16. Verfahren nach Anspruch 11, ferner umfassend das Bestimmen, ob die Vorrichtung (104) mit der linken Hand, der rechten Hand, beiden Händen eines einzigen Benutzers, mehreren Händen von mehr als einem Benutzer, einem Finger oder mehreren Fingern betätigt wird, und Ändern der GUI als Reaktion darauf.

17. Verfahren nach Anspruch 11, ferner umfassend das Verwenden von zuvor erhobenen Daten eines Benutzers der Vorrichtung (104) und Ändern der GUI als Reaktion darauf.

18. Verfahren nach Anspruch 11, ferner umfassend das Ändern der GUI in Abhängigkeit von einer Größe und einer Form eines oder mehrerer der Finger eines Benutzers und einer Art und Weise, wie der eine oder die mehreren Finger in einer spezifischen räumlichen Konfiguration wirkt bzw. wirken.

19. Verfahren nach Anspruch 11, ferner umfassend das Analysieren der erhobenen Sensordaten und das Ändern der GUI basierend auf einem Benutzerzustand oder einem Vorrichtungszustand.

20. Verfahren nach Anspruch 11, ferner umfassend das Abtasten mindestens eines Parameters von: Druck, Widerstand, Orientierung, Schwingung, Biometrie, Temperatur, Umgebungslicht, Geräusche oder Wind, und Ändern der GUI in Abhängigkeit von dem abgetasteten Parameter.

## Revendications

1. Système (100) pour adapter automatiquement une interface utilisateur graphique GUI, d'un dispositif (104), l'interface GUI comportant un ou plusieurs éléments interactifs et éléments non interactifs, le système comportant :
un composant de capteur (101) configuré pour collecter des données concernant une interaction physique avec le dispositif (104) et pour générer un code de capteur basé sur les données collectées, les données collectées représentant une position et une taille d'un premier objet en interaction (603) en contact avec le dispositif (104) et une orientation spatiale d'un second objet en interaction (604) entourant le dispositif (104) sans toucher le dispositif (104), l'orientation spatiale étant détectée par des capteurs spatiaux formés par le composant de capteur (101),
une base de données (102) configurée pour stocker le code de capteur généré, la base de données (102) servant de table de consultation pour corréler le code de capteur généré avec un paramètre de contact physique correspondant, le paramètre de contact physique se rapportant à une manière particulière de faire fonctionner le dispositif (104), et
un composant d'adaptation (103 ; 702) configuré pour faire correspondre le code de capteur généré avec le paramètre de contact physique respectif récupéré de la base de données (102), pour analyser le paramètre de contact physique et pour modifier l'interface utilisateur graphique en fonction du paramètre de contact physique afin d'optimiser l'interaction avec le dispositif, dans lequel la modification de l'interface utilisateur graphique comporte la modification d'un agencement d'au moins un élément parmi l'élément ou les éléments interactifs ou les éléments non interactifs de l'interface GUI, et dans lequel
le paramètre de contact physique comprend une distance du second objet en interaction (604) par rapport au dispositif (104).

2. Système selon la revendication 1, dans lequel le paramètre de contact physique comprend l'orientation du second objet en interaction (604) autour du dispositif (104).

3. Système selon la revendication 1, dans lequel le composant de capteur (101) est configuré pour utiliser une grille tridimensionnelle invisible existant dans l'espace entourant le dispositif (104) pour transcrire un code tenant compte de la position spatiale du second objet en interaction (604) autour du dispositif (104).

4. Système selon la revendication 1, dans lequel le paramètre de contact physique définit une relation entre un ou plusieurs points de contact du premier objet en interaction (603) en contact avec le dispositif (104) et un type du premier objet en interaction (603) en contact avec le dispositif (104).

5. Système selon la revendication 1, dans lequel le composant d'adaptation est en outre configuré pour modifier l'interface utilisateur graphique en fonction d'un mode de fonctionnement, dans lequel le mode de fonctionnement comporte l'actionnement du dispositif (104) avec une main gauche d'un seul utilisateur, une main droite d'un seul utilisateur, les deux mains d'un seul utilisateur, de multiples mains de plusieurs utilisateurs, un doigt d'un seul utilisateur ou de multiples doigts d'un seul utilisateur.

6. Système selon la revendication 1, dans lequel le composant d'adaptation est en outre configuré pour modifier l'interface GUI en fonction de données historiques, les données historiques comportant des données précédemment collectées.

7. Système selon la revendication 1, dans lequel le composant d'adaptation est en outre configuré pour modifier l'interface GUI en fonction de caractéristiques physiques d'un ou plusieurs éléments parmi les doigts d'un utilisateur et une configuration spatiale spécifique du ou des doigts de l'utilisateur.

8. Système selon la revendication 1, dans lequel le composant d'adaptation est en outre configuré pour modifier l'interface GUI en fonction d'au moins un élément parmi une température, une lumière ambiante, une pression atmosphérique, du son, du vent ou le temps.

9. Système selon la revendication 1, dans lequel le composant d'adaptation est en outre configuré pour changer l'interface GUI lorsqu'un utilisateur modifie une manière dont un ou plusieurs des doigts d'un utilisateur interagissent avec le dispositif.

10. Système selon la revendication 1, dans lequel le composant de capteur (101) comporte au moins un élément parmi : un ou plusieurs capteurs capacitifs, un ou plusieurs capteurs résistifs, un ou plusieurs capteurs de pression, un ou plusieurs capteurs de position, un ou plusieurs capteurs inductifs, un ou plusieurs capteurs thermiques, un ou plusieurs capteurs optiques, un ou plusieurs capteurs laser, un ou plusieurs capteurs gyroscopiques, un ou plusieurs capteurs infrarouges, un ou plusieurs capteurs électromagnétiques, un ou plusieurs capteurs biométriques, un ou plusieurs capteurs de vibrations, un ou plusieurs capteurs acoustiques, ou un ou plusieurs accéléromètres.

11. Procédé pour adapter automatiquement une interface utilisateur graphique GUI, d'un dispositif (104), l'interface GUI comportant un ou plusieurs éléments interactifs et éléments non interactifs, le procédé comportant les étapes suivantes consistant à :
collecter avec un composant de capteur (101) formé par le dispositif (104), des données concernant une interaction physique avec le dispositif (104) et générer un code de capteur basé sur les données collectées, les données collectées représentant une position et une taille d'un premier objet en interaction (603) en contact avec le dispositif (104) et une orientation spatiale d'un second objet en interaction (604) entourant le dispositif (104) sans toucher le dispositif (104), l'orientation spatiale étant détectée par des capteurs spatiaux formés par le composant de capteur (101),
stocker le code de capteur généré dans une base de données (102), la base de données (102) servant de table de consultation pour corréler le code de capteur généré avec un paramètre de contact physique correspondant, le paramètre de contact physique concernant une manière particulière de faire fonctionner le dispositif (104), et
faire correspondre le code de capteur généré avec le paramètre de contact physique respectif récupéré de la base de données (102), analyser le paramètre de contact physique et modifier l'interface utilisateur graphique en fonction du paramètre de contact physique pour optimiser l'interaction avec le dispositif, dans lequel la modification de l'interface utilisateur graphique comporte la modification d'un agencement d'au moins un élément parmi l'élément ou les éléments interactifs ou les éléments non interactifs de l'interface GUI, et dans lequel
le paramètre de contact physique comprend une distance du second objet en interaction (604) par rapport au dispositif (104).

12. Procédé selon la revendication 11, dans lequel les données collectées comportent également une orientation du dispositif (104).

13. Procédé selon la revendication 11, dans lequel le paramètre de contact physique comprend l'orientation du second objet en interaction (604) autour du dispositif (104).

14. Procédé selon la revendication 11, comportant en outre l'utilisation d'une grille tridimensionnelle invisible existant dans l'espace entourant le dispositif pour transcrire un code tenant compte de la position spatiale du second objet en interaction (604) autour du dispositif (104).

15. Procédé selon la revendication 11, dans lequel le paramètre de contact physique définit une relation entre un ou plusieurs points de contact du premier objet en interaction (603) en contact avec le dispositif (104) et un type du premier objet en interaction (603) en contact avec le dispositif (104).

16. Procédé selon la revendication 11, comportant en outre la détermination de si le dispositif (104) est actionné par une main gauche, une main droite, les deux mains d'un seul utilisateur, de multiples mains de plusieurs utilisateurs, un doigt ou de multiples doigts, et la modification de l'interface GUI en réponse.

17. Procédé selon la revendication 11, comportant en outre l'utilisation de données précédemment collectées d'un utilisateur du dispositif (104) et la modification de l'interface GUI en réponse.

18. Procédé selon la revendication 11, comportant en outre la modification de l'interface GUI en fonction d'une taille et d'une forme d'un ou plusieurs éléments parmi les doigts d'un utilisateur et une manière dont le ou les doigts opèrent dans une configuration spatiale spécifique.

19. Procédé selon la revendication 11, comportant en outre l'analyse des données de capteur collectées et la modification de l'interface GUI sur la base d'un état d'utilisateur ou d'un état de dispositif.

20. Procédé selon la revendication 11, comportant en outre la détection d'au moins un paramètre parmi : une pression, une résistance, une orientation, une vibration, une biométrie, une température, une lumière ambiante, du son ou du vent, et la modification de l'interface GUI en fonction du paramètre détecté.
